# EUROPÄISCHE PATENTSCHRIFT

(11) **EP 3 452 317 B1**
(45) Veröffentlichungstag und Bekanntmachung des Hinweises auf die Patenterteilung: **22.07.2020**
(21) Anmeldenummer: 17719986.6
(22) Anmeldetag: 20.04.2017
(51) Int. Cl.: B60J 3/04, B60Q 1/14, G06K 9/00, B60Q 1/08

(54) **VERFAHREN ZUM VERBESSERN VON LICHTVERHÄLTNISSEN AUS SICHT EINES FAHRERS EINES KRAFTFAHRZEUGS**
METHOD FOR IMPROVING LIGHT CONDITIONS FROM THE POINT OF VIEW OF A DRIVER OF A MOTOR VEHICLE
PROCÉDÉ PERMETTANT D'AMÉLIORER LES CONDITIONS DE LUMINOSITÉ DU POINT DE VUE DU CONDUCTEUR D'UN VÉHICULE AUTOMOBILE

(30) Priorität: 02.05.2016 AT 504022016
(43) Veröffentlichungstag der Anmeldung: 13.03.2019
(73) Patentinhaber: ZKW Group GmbH, 3250 Wieselburg (AT)
(72) Erfinder: HARTMANN, Peter, 3392 Schönbühel-Aggsbach (AT); REINPRECHT, Markus, 3384 Pielachhäuser (AT)
(74) Vertreter: Patentanwaltskanzlei Matschnig & Forsthuber OG
(86) Internationale Anmeldenummer: PCT/AT2017/060100
(87) Internationale Veröffentlichungsnummer: WO 2017/190166

(56) Entgegenhaltungen:
- EP-A1- 2 127 944
- DE-A1-102005 007 427
- DE-A1-102011 081 396
- DE-A1-102011 118 802
- DE-A1-102014 011 117

## Beschreibung

Die Erfindung betrifft ein Verfahren zum Verbessern von Lichtverhältnissen aus Sicht eines Fahrers eines Kraftfahrzeugs.

Darüber hinaus betrifft die Erfindung ein Steuerungssystem eines Fahrzeugs zum Ausführen des Verfahrens.

Außerdem betrifft die Erfindung ein Fahrzeug mit zumindest einem solchen Steuerungssystem.

Blendung im Straßenverkehr ist ein seit langem bekanntes wichtiges Problem. Der Begriff Blendung ist in DIN EN 12665 *"Licht und Beleuchtung-Grundlegende Begriffe und Kriterien für die Festlegung von Anforderungen an die Beleuchtung"* definiert. Gemäß DIN EN 12665 besteht eine negative Korrelation zwischen einem Sehzustand und einer Leuchtdichteverteilung und/oder Höhe der Kontraste. Das heißt, dass beispielsweise bei zu hohen Kontrasten typischerweise ein unangenehm empfundener Sehzustand entsteht. So können große Leuchtdichteunterschiede oder ungünstige Leuchtdichteverteilungen, welche Leuchtdichteverteilungen großer Kontrastunterschiede aufweisen, im Sichtfeld des Fahrers zu einem unangenehmen Gefühl (psychologische Blendung) oder eine tatsächlich nachweisbaren Verminderung der Seeleistung (physiologische Blendung) führen. Zur Quantifizierung der Blendung können verschiedene Größen (Blendungsgrößen) herangezogen werden. Eine Übersicht über die Blendungsgrößen (wie beispielsweise Schleierleuchtdichte) kann beispielsweise einer Veröffentlichung des Instituts für Arbeitsschutz der Deutschen gesetzlichen Unfallversicherung zum Thema "Blendung - theoretischer Hintergrund" vom Mai 2010 entnommen werden.

Einrichtungen und Verfahren zur Reduktion der Blendung eines Fahrzeugfahrers im Straßenverkehr durch Blendlichtquellen der oben genannten Art sind aus dem Stand der Technik bekannt. Die Anmeldung DE 10 2011 081396 A1 offenbart ein Verfahren gemäß dem Oberbegriff des Anspruchs 1. Die Anmeldung DE 10 2012 205 429 A1 offenbart ein System, welches mittels eines Head-up-Displays Informationen in das Sichtfeld des Fahrers projiziert. Das Head-up-Display ist mit Bildberechnungsmitteln gekoppelt, welche zur Berechnung und zur Erzeugung von Bildinformationen für das Head-up-Display eingerichtet sind. Die Bildberechnungsmethoden sind mit den Detektionsmittel gekoppelt, welche Blendlichtquellen detektieren und diese Information an die Bildberechnungsmittel weiterleiten. Anhand dieser Information wird seitens Bildberechnungsmittel Bildinformation derart erzeugt, dass nach Projektion des resultierenden Bildes in das Sichtfeld des Fahrers die Umfeldleuchtdichte im Sichtfeld des Fahrers erhöht wird. Eine derartige Erhöhung der Umfeldleuchtdichte hat mehrere Nachteile. Erstens kann mit diesem Verfahren eine physiologische Blendung nicht vermieden werden. Zweitens kann dadurch eine Blendung anderer Verkehrsteilnehmer verursacht werden, da das Head-up-Display nicht an die Steuerung der Scheinwerfer des Fahrzeugs gekoppelt ist. Drittens ist eine Verbesserung der Erkennbarkeit von diffusen Objekten mit diesem Verfahren schwierig, zumal die Kontraständerungen nur auf einem relativ kleinen Head-up-Display vorgenommen werden auf welchem beispielsweise kleine Objekte leicht übersehen werden können.

Die Anmeldung DE 10 2011118 802 A1 legt ein Verfahren zum Verringern von Blendlicht aus einer Lichtquelle offen, welches Blendlicht mittels einer ICF-Windschutzscheibe abgeblendet wird. Dabei kann das Blendlicht einer an einem zweiten Fahrzeug angeordneten Lichtquelle entstammen. Nachteilig bei diesem Verfahren ist, dass dunkle Objekte immer noch als dunkel erscheinen und vom Fahrer sehr leicht übersehen werden können, zumal wenn sich diese dunklen Objekte nah an den Blendquellen (im Sinne vom Winkel zwischen der Blickrichtung auf die Blendquelle und der Blickrichtung auf das Objekt) befinden.

Daher ist die Aufgabe der vorliegenden Erfindung die oben genannten Nachteile des Standes der Technik zu beseitigen und die Lichtverhältnisse aus Sicht eines Fahrers eines Kraftfahrzeugs zu verbessern.

Die Aufgabe wird mit einem eingangs genannten Verfahren erfindungsgemäß dadurch gelöst, dass das Kraftfahrzeug eine erste Messeinrichtung, zumindest eine Beleuchtungsvorrichtung, eine Abdunkelungseinrichtung, und eine Steuereinrichtung umfasst, wobei die erste Messeinrichtung zum Vermessen eines Bereichs vor dem Kraftfahrzeug hinsichtlich Lichtverhältnisse, Abstände zu und Geschwindigkeiten von vor dem Kraftfahrzeug befindlichen Objekten und zum Erzeugen/Sammeln von Messdaten, welche zumindest die Lichtverhältnisse und die Abstände zu und die Geschwindigkeiten von vor dem Kraftfahrzeug befindlichen Objekten umfassen, eingerichtet ist, die zumindest eine Beleuchtungsvorrichtung dazu eingerichtet ist, eine programmierbare Lichtverteilung vor dem Kraftfahrzeug zu erzeugen, die Abdunkelungseinrichtung dazu eingerichtet ist, in einen Fahrzeuginnenraum von außen eindringendes Außenlicht, vorzugsweise steuerbar, zumindest teilweise abzublenden, und die Steuereinrichtung zum Ausführen der folgenden Schritte eingerichtet ist:
- Messen einer Leuchtdichteverteilung vor dem Kraftfahrzeug und Abständen zu und Geschwindigkeiten von Objekten vor dem Fahrzeug, um die Messdaten zu erzeugen / zu sammeln;
- Auswerten von den (erzeugten/ gesammelten) Messdaten, um ausgewertete Messdaten zu erzeugen;
- Erkennen von Objekten vor dem Kraftfahrzeug als blendend unter Verwendung von den ausgewerteten Messdaten;
- Erkennen von Objekten vor dem Kraftfahrzeug als dunkel und fahrsituationsrelevant unter Verwendung von den ausgewerteten Messdaten;
- Abblenden des von als blendend erkannten Objekten erzeugten Außenlichts (des blendenden Außenlichts) mittels der Abdunkelungseinrichtung;
- Ändern der Lichtverteilung durch Anheben der von der Beleuchtungsvorrichtung erzeugten Beleuchtung der als dunkel und fahrsituationsrelevant erkannten Objekte und/oder Absenken der Beleuchtung der als blendend erkannten Objekte.

Dabei kann das Absenken der Beleuchtung der als blendend erkannten Objekte bis hin zum kompletten Ausblenden von den als blendend erkannten Objekten reichen. Das komplette Ausblenden kann beispielsweise bei Nachtfahrten vorteilhaft sein und die - sonst geblendeten - Fahrer entgegenkommender Fahrzeuge vor Blendung bewahren.

Wenn es nicht anderes angegeben ist, wird im Zusammenhang mit der vorliegenden Erfindung unter "allen relevanten Objekten" eine Gesamtheit der als blendend und als dunkel und fahrsituationsrelevant erkannten Objekte verstanden.

An dieser Stelle soll angemerkt sein, dass es zweckmäßig sein kann, wenn das Abblenden des von als blendend erkannten Objekten erzeugten Außenlichts und das Ändern der Lichtverteilung aus Sicht des Fahrers (aus Fahrersicht) erfolgt. Dafür kann es vorgesehen sein, dass zumindest ein Teil der ersten Messeinrichtung aus Fahrersicht messen kann. Unter einem Teil der ersten Messeinrichtung ist eine Teileinrichtung oder Modul der ersten Messeinrichtung zu verstehen, der dazu eingerichtet ist, zumindest einen Teil der Messdaten zu sammeln, z.B. die Leuchtdichteverteilung vor dem Kraftfahrzeug zu messen. Auf diese Weise wird zumindest ein Teil der Messdaten aus Sicht des Fahrers aufgenommen. Von besonderem Vorteil kann es sein, wenn der zumindest eine Teil der ersten Messeinrichtung alle, von der ersten Messeinrichtung gesammelte Messdaten aus Fahrersicht sammeln kann. So können die aus Fahrersicht gesammelten Messdaten mit den mithilfe der restlichen Teile der ersten Messeinrichtung gesammelten Messdaten verglichen und ausgewertet werden. Darüber hinaus ist es vorteilhaft, wenn der zumindest eine Teil der ersten Messeinrichtung bezüglich der Abdunkelungseinrichtung derart angeordnet ist, dass die Abdunkelungseinrichtung die durch den Teil der ersten Messeinrichtung durchgeführte Messung (beispielsweise einer Leuchtdichteverteilung) beeinflussen kann. Besonders vorteilhaft hinsichtlich einer Optimierung der Lichtverhältnisse aus Fahrersicht, d.h. aus Sicht des Fahrers, ist es, wenn der Teil der ersten Messeinrichtung die Leuchtdichteverteilung aus Sicht des Fahrers messen kann. Beispielsweise, wenn der Teil der ersten Messeinrichtung als eine Kamera und die Abdunkelungseinrichtung als eine variierbare Transparenz für das sichtbare Licht aufweisende Windschutzscheibe ausgebildet ist, kann der Teil der ersten Messeinrichtung im Fahrzeuginnenraum, vorzugsweise im Fahrerkopfstützenbereich, angeordnet sein.

Außerdem kann es mit Vorteil vorgesehen sein, dass zumindest ein weiterer Teil der ersten Messeinrichtung dazu eingerichtet ist, aus Fahrzeugsicht zu messen und die Messdaten aus Fahrzeugsicht aufgenommene Messdaten umfassen. Das Vorhandensein von den Messdaten aus Fahrzeugsicht erleichtert die Steuerung der Beleuchtungsvorrichtung (Ändern der Lichtverteilung in Schritt 6).

Darüber hinaus kann es vorteilhaft sein, wenn die erste Messeinrichtung zumindest eine Wärmebildkamera umfasst und das Verfahren weiterhin folgende Schritte aufweist:
- Aufnehmen von Wärmebildern mithilfe der Wärmebildkamera;
- Erkennen von als dunkel erkannten Objekten als fahrsituationsrelevant unter Verwendung von Wärmebildern.

Besonders bei Dunkelheit (zum Beispiel nachts) oder schlechten Sichtverhältnissen (zum Beispiel Nebel) können die Wärmebilder beim Erkennen von je nach Fahrsituation potenziell gefährlichen (fahrsituationsrelevanten) Objekten behilflich sein. So kann beispielsweise die Relevanz der anhand der Leuchtdichteverteilung als dunkel erkannten Objekte in einer bestimmten Fahrsituation schneller erkannt werden. Handelt es sich bei einem als dunkel erkannten und nahe der Fahrbahn befindlichen Objekt um ein Lebewesen, so kann dieses Lebewesen sofort als potenziell gefährlich oder gefährdet, also fahrsituationsrelevant eingestuft (erkannt) werden, ohne dass auf seine Geschwindigkeit und/oder Bewegungsmuster Bezug genommen wird.

Bei einer besonders günstigen Variante der vorliegenden Erfindung kann es vorgesehen sein, dass die erste Messeinrichtung zumindest eine Kamera zur Aufnahme von Bildern und/oder Videos umfasst und das Messen der Leuchtdichteverteilung weiterhin folgende Schritte aufweist:
- Aufnehmen von Bildern und/oder Videos mithilfe der zumindest einen Kamera, und
- Auswerten der Bilder und/oder Videos hinsichtlich der Leuchtdichteverteilung vor dem Kraftfahrzeug.

Einen besonderen Vorteil kann man dabei erreichen, wenn die zumindest eine Kamera derart angeordnet ist, dass die mithilfe der zumindest einen Kamera aufgenommenen Bilder und/oder Videos den Bilder und/oder Videos aus Sicht des Fahrers entsprechen.

Bei dieser Variante der Erfindung kann die zumindest eine Kamera die Bilder und / oder die Videos aus Sicht des Fahrers aufnehmen. Es ist außerdem zweckmäßig, wenn die Sicht des Fahrers und die mit der zumindest einen Kamera erzielten Aufnahmen durch die Abdunkelungseinrichtung, welche Abdunkelungseinrichtung beispielsweise als eine mit einer Intensitätssteuerungsfolie versehene Windschutzscheibe ausgebildet sein kann, beeinflusst werden können. Dadurch können die Bilder und / oder die Videos einer Umgebung des Fahrers dergestalt aufgenommen werden, wie der Fahrer seine Umgebung mit seinen Augen sieht und wahrnimmt.

Außerdem kann es zweckmäßig sein, wenn die Steuereinrichtung die Leuchtdichteverteilung zumindest hinsichtlich Positionen der als blendend erkannten Objekte auswertet, und das Verfahren weiterhin folgende Schritte umfasst:
- Ermitteln notwendiger Abblendestärken, insbesondere unter Verwendung der Schleierleuchtdichtewerte der als blenden erkannten Objekte, und
- Abblenden der als blendend erkannten Objekte unter Verwendung der notwendigen Abblendestärken und/oder der Positionen der als blendend erkannten Objekte.

Um zu ermitteln, wie stark die Blendquellen, d.h. die als blendend erkannten Objekte, blenden und folglich wie stark mittels der Abdunkelungseinrichtung abgeblendet werden soll, kann es vorteilhaft sein, die Positionen der Blendquellen in der Leuchtdichteverteilung zu bestimmen, d.h. wo sich die Blendquellen in der Leuchtdichteverteilung befinden, welche Leuchtdichteverteilung vorzugsweise aus der Fahrersicht, d.h. beispielsweise mit einer in einem Kopfstützenbereich angeordneten Kamera, aufgenommenen werden kann. Da die herkömmlichen Blendungsgrößen, wie zum Beispiel die Schleierleuchtdichte, von der Position der Blendquelle im Sichtfeld des Fahrers abhängen kann, können die Positionen der Blendquellen bezüglich beispielsweise der Position des Fahreraugenbereichs für eine bessere, gezielte Abblendung mittels der Abdunkelungseinrichtung sorgen.

Um eine bessere Erkennbarkeit von kontrastschwachen Objekten zu ermöglichen, kann es mit Vorteil vorgesehen sein, dass die Steuereinrichtung die Leuchtdichteverteilung zumindest hinsichtlich Kontrastwerte, insbesondere Weber-Kontrastwerte, anhand der Leuchtdichtewerte der als blendend erkannten Objekte und der Leuchtdichtewerte der als dunkel und fahrsituationsrelevant erkannten Objekte auswertet, und das Verfahren weiterhin folgende Schritte aufweist:
- Ändern der Kontrastwerte, insbesondere der Weber-Kontrastwerte.

Als Maß für psychologische Blendung kann beispielsweise die De-Boer-Skala herangezogen werden. Eine Zahl nach De-Boer-Skala (DIN 5340 *"Begriffe der physiologischen Optik")* dient als Maß für Störempfindung. Der Vorteil bei einer Änderung der Blendungswerte, insbesondere der Blendungszahlen nach der De-Boer-Skala, mittels der Abdunkelungseinrichtung und/oder mittels der Beleuchtungsvorrichtung liegt im Verbessern der psychologischen Wahrnehmung.

Bei einer günstigen Variante der vorliegenden Erfindung kann vorgesehen sein, dass die Steuereinrichtung die Leuchtdichteverteilung zumindest hinsichtlich Blendungswerte, insbesondere Blendungszahlen nach De-Boer-Skala, für alle als blendend erkannte Objekte auswertet, und das Verfahren weiterhin folgende Schritte aufweist:
- Ändern der Blendungswerte, insbesondere der Blendungszahlen nach De-Boer-Skala, durch das Abblenden des von als blendend erkannten Objekten erzeugten Außenlichts (des blendenden Außenlichts) mittels der Abdunkelungseinrichtung und/oder durch das Ändern der Lichtverteilung durch Anheben der von der Beleuchtungsvorrichtung erzeugten Beleuchtung der als dunkel und fahrsituationsrelevant erkannten Objekte und Absenken der Beleuchtung der als blendend erkannten Objekte.

Bei einer bevorzugten Variante der vorliegenden Erfindung kann es vorgesehen sein, dass zumindest ein zum Aufnehmen der Leuchtdichteverteilung eingerichteter Teil der ersten Messeinrichtung in dem Kraftfahrzeuginnenraum angeordnet ist, die Abdunkelungseinrichtung als eine programmierbare und/oder steuerbare, vorzugsweise segmentierte, Intensitätssteuerungsfolie (ICF) auf zumindest einer Windschutzscheibenoberfläche (ICF-Windschutzscheibe) des Kraftfahrzeugs ausgebildet ist, und dabei das Abblenden des blendenden Außenlichts weiterhin folgende Schritte umfasst:
- Zuordnen von ICF-Bereichen zu den als blendend erkannten Objekten;
- Absenken der Transparenz der ICF-Bereiche und/oder Anheben der Transparenz der Intensitätssteuerungsfolie außerhalb dieser ICF-Bereiche. Das bringt weitere Vorteile. Erstens kann die Leuchtdichteverteilung durch die Abdunkelungseinrichtung aufgenommen und beispielsweise in Echtzeit angepasst /nachjustiert werden. Zweitens ermöglicht eine als eine programmierbare ICF-Windschutzscheibe ausgebildete Abdunkelungseinrichtung ein effektives Abblenden im Wesentlichen ganzen maximalen mit einer Augenbewegung und mit einer Kopfdrehung erreichbaren Sichtfeld des Fahrers. Unter diesem Sichtfeld wird ein Sichtfeld verstanden, welches physiologisch mit einer Kopfrotation und einer Augendrehung erreichbar ist (siehe unten). Darüber hinaus kann die Programmierbarkeit der ICF-Windschutzscheibe seine problemlose Anknüpfung an die Steuereinrichtung und eine gute Steuerbarkeit implizieren. Es kann darüber hinaus vorteilhaft sein, wenn die ICF-Windschutzscheibe segmentiert ausgebildet ist. Außerdem kann es zweckdienlich sein, wenn die Größe von ICF-Segmenten in etwa 5x5 mm beträgt. Mit derartigen ICF-Segmenten können unterschiedlich ausgebildete ICF-Bereiche abgedunkelt werden. Dabei ist es beispielsweise möglich jedes Auge des Fahrers einzeln vor Blendung zu schützen.

Außerdem kann es zweckdienlich sein, wenn die zumindest eine Beleuchtungsvorrichtung dazu eingerichtet ist, eine segmentweise programmierbare Lichtverteilung vor dem Kraftfahrzeug zu erzeugen, und das Ändern der Lichtverteilung weiterhin folgende Schritte aufweist:
- Zuordnen von ersten Lichtverteilungssegmenten zu den als blendend erkannten Objekten;
- Absenken der Lichtstärke in den ersten Lichtverteilungssegmenten;
- Zuordnen von zweiten Lichtverteilungssegmenten zu den als dunkel und fahrsituationsrelevant erkannten Objekten;
- Anheben der Lichtstärke in den zweiten Lichtverteilungssegmenten oder in allen anderen außer den ersten Lichtverteilungssegmenten.

Das Ändern der Lichtstärke in den Lichtverteilungssegmenten kann beispielsweise durch das Ändern des Lichtstroms durch die entsprechenden Segmente der zur Erzeugung einer segmentweise programmierbaren Lichtverteilung eingerichteten Beleuchtungsvorrichtung erfolgen. So kann z.B. die Lichtstärke in einem Lichtverteilungssegment durch Dimmen/ Aufhellen von LEDs (oder von anderen Lichtquellen) abgesenkt/ angehoben werden, welche LEDs (oder andere Lichtquellen) zur Abstrahlung des Lichts zu Erzeugung des Lichtverteilungssegments eingerichtet sind.

Darüber hinaus kann es mit Vorteil vorgesehen sein, dass das Verfahren weiterhin folgende Schritte aufweist:
- Erkennen von vorausfahrenden und/oder entgegenkommenden Fahrzeuge, und
- Zuordnen von ersten Lichtverteilungssegmenten zu den vorausfahrenden und/oder entgegenkommenden Fahrzeugen.

Dabei können das Zuordnen von ersten Lichtverteilungssegmenten zu den als blendend erkannten Objekten und das Absenken der Lichtstärke durch die ersten Lichtverteilungssegmente vorteilhaft sein, wenn zum Beispiel nachts entgegenkommende und/oder vorausfahrende Fahrzeuge (inklusive Bereich zwischen den Leuchten) ausgeblendet werden und dadurch Rücksicht auf die anderen Fahrer genommen wird.

Das Zuordnen von zweiten Lichtverteilungssegmenten zu den als dunkel und fahrsituationsrelevant erkannten Objekten und Anheben der Lichtstärke durch die zweiten Lichtverteilungssegmente oder durch alle anderen außer der ersten Lichtverteilungssegmente erbringt den Vorteil besserer Erkennbarkeit der dunklen und fahrsituationsrelevanten Objekte, beispielsweise Lebewesen, wie Personen oder Tiere, Verkehrsschilder usw.

Erfindungsgemäß ist vorgesehen, dass das Kraftfahrzeug eine zweite Messeinrichtung umfasst, welche zweite Messeinrichtung zum, vorzugsweise dynamischen, Vermessen, insbesondere zum Vermessen in Echtzeit, des Fahrzeuginnenraums hinsichtlich sichtrelevanter Parameter des Fahrers, wie z.B. Augenhöhe und/oder Augenbereichsposition und/oder Kopfposition, eingerichtet ist. Die Steuereinrichtung kann unter Verwendung von mit der zweiten Messeinrichtung gesammelten Messdaten, welche Messdaten zumindest die Augenhöhe und/oder die Augenbereichsposition und/oder die Kopfposition des Fahrers umfassen, zum Ausführen der folgenden zusätzlichen Schritte eingerichtet sein:
- Ermitteln von Blendungswerten, insbesondere von Blendungszahlen nach der De-Boer-Skala, für alle relevante, d.h. für als blendend und als dunkel und fahrsituationsrelevant erkannte, Objekte unter Verwendung von den mit der zweiten Messeinrichtung gesammelten Messdaten;
- Ändern der Blendungswerte, insbesondere der Blendungszahlen nach der De-Boer-Skala, durch das Abblenden des von als blendend erkannten Objekten erzeugten Außenlichts (des blendenden Außenlichts) mittels der Abdunkelungseinrichtung und/oder durch das Ändern der Lichtverteilung durch Anheben der erzeugten Beleuchtung der als dunkel und fahrsituationsrelevant erkannten Objekte und Absenken der Beleuchtung der als blendend erkannten Objekte mittels der Beleuchtungsvorrichtung.

Im Zusammenhang mit der vorliegenden Erfindung wird unter den Begriffen dynamisch und in Echtzeit eine Zeitabhängigkeit eines Prozesses verstanden. So ist beispielsweise unter einem dynamischen Vermessen, ein Vermessen in bestimmten Zeitabständen zu verstehen, die beispielsweise in einem Bereich von Zehntelsekunden bis zehn Sekunden liegen können. Eine Aufnahme in Echtzeit bedeutet, dass zum Beispiel Bilder in Zeitabständen aufgenommen werden, die geringer als Zehntelsekunden sind, oder dass Videos kontinuierlich aufgenommen werden.

Eine mit Vorzug dynamisch, insbesondere in Echtzeit, stattfindende Aufnahme / Vermessung der sichtrelevanten Parameter des Fahrers hat zum Vorteil, dass man zur Berechnung der Blendungszahlen und, wie weiter unten erläutert, Blendungsgrößen eine genauere Position des Kopfes und/oder des Augenbereichs und/oder der Augen des Fahrers verwenden kann. Darüber hinaus kann die ermittelte tatsächliche Position des Kopfes und/oder des Augenbereichs und/oder der Augen des Fahrers für eine bessere genauere Steuerung der Abdunkelungseinrichtung und/oder der Beleuchtungsvorrichtung beitragen. Dabei können/kann die Abdunkelungseinrichtung und/oder die Beleuchtungsvorrichtung unter Verwendung von den tatsächlichen sichtrelevanten Parameter des Fahrers angesteuert werden, welche sichtrelevante Parameter vorzugsweise dynamisch, insbesondere in Echtzeit, aktualisiert werden. Außerdem kann die Position der als blendend erkannten Objekte in der vorzugsweise aus der Fahrersicht aufgenommenen Leuchtdichteverteilung mit dem, beispielsweise mithilfe der zweiten Messeinrichtung erfassten, Sichtfeld des Fahrers abgeglichen werden. Anhand dieses Abgleichs kann entschieden werden, ob und wie stark die als blendend erkannten Objekte abgeblendet werden.

Erfindungsgemäß ist die zweite Messeinrichtung zum, vorzugsweise dynamischen, Vermessen, insbesondere zum Vermessen in Echtzeit, des Fahrzeuginnenraums zumindest hinsichtlich einer Augenhöhe und/oder einer Augenbereichsposition und/oder einer Kopfposition des Fahrers eingerichtet. Die Steuereinrichtung kann unter Verwendung von mit der zweiten Messeinrichtung gesammelten Messdaten, welche Messdaten zumindest die Augenhöhe und/oder die Augenbereichsposition und/oder die Kopfposition des Fahrers umfassen, zum Ausführen der folgenden zusätzlichen Schritte eingerichtet sein:
- Ermitteln von abzublendenden Bereichen im Sichtfeld des Fahrers unter Verwendung von den mit der zweiten Messeinrichtung gesammelten Messdaten;
- Ermitteln notwendiger Abblendstärken, insbesondere unter Verwendung der Schleierleuchtdichtewerte der als blenden erkannten Objekte, und
- Abblenden der abzublendenden Bereiche im Sichtfeld des Fahrers unter Verwendung von den notwendigen Abblendstärken.

Vorteilhaft bei dieser Variante der Erfindung ist eine, vorzugsweise dynamische, Zuordnung, insbesondere Echtzeit Zuordnung, der Blendquellen den Bereichen im Sichtfeld des Fahrers. Dadurch können die Modifizierung der Licht- und/oder Sichtverhältnisse mithilfe der Abdunkelungseinrichtung und/oder Beleuchtungsvorrichtung präziser und beispielsweise unter Berücksichtigung der Kopfausrichtung des Fahrers erfolgen.

Darüber hinaus kann es vorteilhaft sein, wenn die Abdunkelungseinrichtung als eine programmierbare und/oder steuerbare, vorzugsweise segmentierte, Intensitätssteuerungsfolie (ICF) auf einer Windschutzscheibenfläche des Fahrzeugs ausgebildet ist, die erste Messeinrichtung in dem Kraftfahrzeuginnenraum angeordnet ist und die Steuereinrichtung unter Verwendung von mit der zweiten Messeinrichtung gesammelten Messdaten, welche Messdaten zumindest die Augenhöhe und/oder die Augenbereichsposition und/oder die Kopfposition des Fahrers umfassen, und zum Ausführen der folgenden zusätzlichen Schritte eingerichtet ist:
- Ermitteln von abzublendenden Bereichen im Sichtfeld des Fahrers;
- Zuordnen der abzublendenden Bereichen im Sichtfeld des Fahrers zu den ICF-Bereichen;
- Absenken der Transparenz der so zugeordneten ICF-Bereiche und/oder Anheben der Transparenz der ICF außerhalb der so zugeordneten ICF-Bereiche.

Eine programmierbare und/oder steuerbare, vorzugsweise segmentierte, ICF-Windschutzscheibe bringt beispielsweise den Vorteil, dass das Sichtfeld des Fahrers segmentweise abgeblendet oder aufgehellt werden kann. Eine segmentweise Abblendung kann sehr schnell erfolgen und bei einer im Sichtfeld des Fahrers plötzlich aufgetauchten Blendquelle von großem Vorteil sein.

Erfindungsgemäß ist die Steuereinrichtung unter Verwendung von mit der zweiten Messeinrichtung gesammelten Messdaten, welche Messdaten zumindest die Augenhöhe und/oder die Augenbereichsposition und/oder die Kopfposition des Fahrers umfassen, zum Ausführen der folgenden Schritte eingerichtet:
- Ermitteln von abzublendenden Bereichen im Sichtfeld des Fahrers;
- Ermitteln von aufzuhellenden Bereichen im Sichtfeld des Fahrers, und
- Ändern der Lichtverteilung durch Anheben der von der Beleuchtungsvorrichtung erzeugten Beleuchtung der aufzuhellenden Bereiche und Absenken der Beleuchtung der abzublendenden Bereiche.

Bei dieser Variante der Erfindung wird eine Licht- und/oder Sichtverhältnisse verbessernde Lichtverteilung erzeugt, bei deren Erzeugung auf das aktuelle Sichtfeld des Fahrers Bezug genommen wird.

Die Aufgabe der Verbesserung der Licht- und / oder Sichtverhältnisse kann außerdem erfindungsgemäß mit einem Steuerungssystems eines Fahrzeugs zum Ausführen des eingangs genannten Verfahrens gelöst werden.

Darüber hinaus verwendet die Steuereinrichtung beim Ausführen des Verfahrens die mit der zweiten Messeinrichtung gesammelten Messdaten, welche Messdaten zumindest die Augenhöhe und/oder die Augenbereichsposition und/oder die Kopfposition des Fahrers umfassen.

Die Erfindung wird nachfolgend anhand nichteinschränkender Ausführungsbeispiele näher erläutert, die in den beigefügten schematischen Zeichnungen veranschaulicht sind. In diesen zeigt
Fig. 1 ein schematisches Flussdiagramm eines Verfahrens zum Verbessern von Lichtverhältnissen aus Sicht eines Fahrers eines Kraftfahrzeugs gemäß einem Ausführungsbeispiel der Erfindung;
Fig. 2 eine schematische Darstellung eines Kraftfahrzeugs, das das Verfahren der Fig. 1 anwendet;
Fig. 3 die Windschutzscheibe des Kraftfahrzeug der Fig. 2 aus Fahrersicht;
Fig. 4 eine segmentierte ICF-Windschutzscheibe;
Fig. 5 eine Teilfläche der Abdunkelungseinrichtung der Fig. 4 mit abgedunkelten Bereichen;
Fig. 6 eine dreilagige ICF-Windschutzscheibe;
Fig. 7 eine Darstellung aus Fahrersicht mit abgeblendeter Sonne und einem aufgehellten Verkehrsschild;
Fig. 8 ein Flussdiagramm einer bevorzugten Ausführungsform des Verfahrens - Algorithmus 1, und
Fig. 9 ein Flussdiagramm einer weiteren bevorzugten Ausführungsform des Verfahrens - Algorithmus 2.

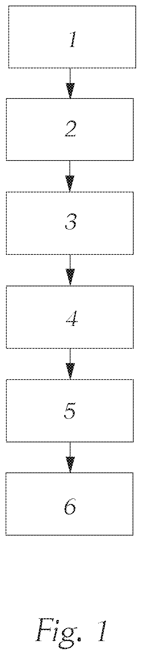

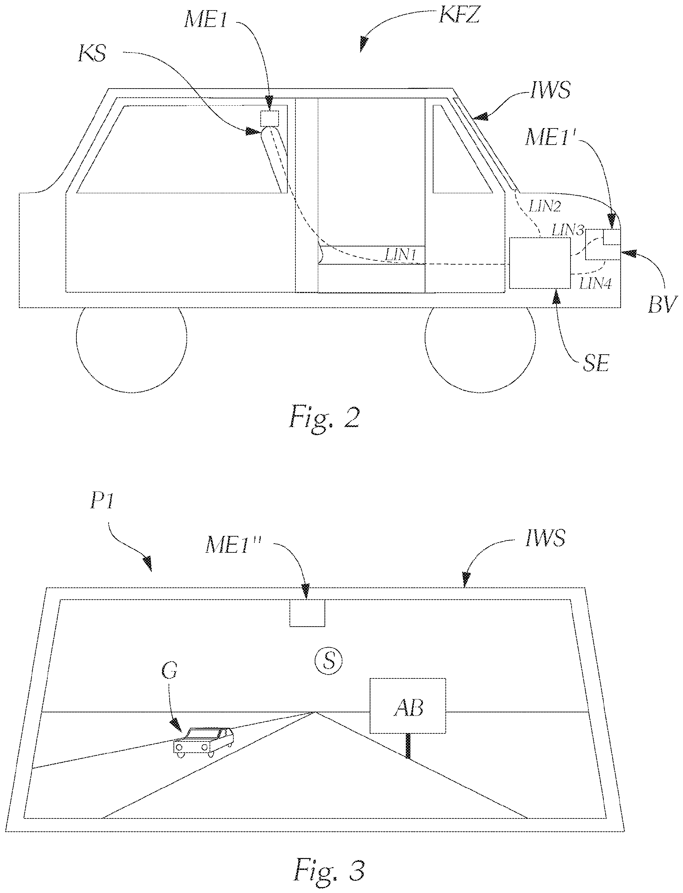

Zunächst wird auf Fig. 1 Bezug genommen. In Fig. 1 ist ein schematisches Flussdiagramm eines erfindungsgemäßen Verfahrens gezeigt. Das beispielhafte Verfahren umfasst sechs Schritte 1 bis 6; es können zusätzliche Schritte eingebunden werden. Die exakte Reihenfolge der Schritte 3 und 4 sowie der Schritte 5 und 6 ist nicht erforderlich, d.h. der Schritt 3 kann nach dem Schritt 4 und der Schritt 6 kann nach dem Schritt 5 ausgeführt werden. Das Messen einer Leuchtdichteverteilung in dem Bereich vor einem Kraftfahrzeug KFZ (Schritt 1) erfolgt mittels eines ersten Messmoduls ME1, ME1', ME1" (siehe Fig. 2 und Fig. 3), welches beispielsweise der ersten Messeinrichtung entsprechen kann. Das erste Messmodul ME1, ME1', ME1" kann beispielsweise als ein zur Aufnahme von Bildern und / oder Videos, vorzugsweise in HDR-Qualität, eingerichtetes Kamerasystem ME1, ME1', ME1" ausgebildet sein, welches Kamerasystem eine, zwei oder mehr Kameras ME1, ME1', ME1" umfasst. Die Bilder und/oder die Videos können dabei den von der ersten Messeinrichtung gesammelten/erzeugten Messdaten entsprechen. Bei den Kameras des Kamerasystems kann es sich beispielsweise um aus dem Stand der Technik bekannte Kameras für automobile Assistenz-Anwendungen, z.B. SeeQ2® von MOBILEYE® oder Kamera-Photometer wie z.B.: ein *"TECHNOTEAM LMK mobile air* - *Portables Kamera Photometer"* von OPTEEMA Engineering GmbH, mit einer dazugehörigen Software handeln, welche Software beispielsweise auf einer Steuereinrichtung ausführbar ist. Dabei kann zumindest ein Teil des ersten Messmoduls, beispielsweise eine Kamera, vorzugsweise im Fahrzeuginnenraum ME1, beispielsweise im Bereich des mittleren Rückspiegels ME1" (Fig. 3) nahe der Windschutzscheibe IWS, angeordnet/montiert sein und einen Bereich knapp vor dem Kraftfahrzeug bis weit in die Ferne (>300m) (Kraftfahrzeugvorfeldbereich) erfassen bzw. auf diesen fokussiert oder ausgerichtet sein. Vorzugsweise umfasst das erste Messmodul zumindest eine im Fahrzeuginnenraum derart angeordnete Kamera ME1, dass die mithilfe dieser Kamera ME1 erzielten Aufnahmen den Bildern und/oder Videos aus Sicht des Fahrers P1, P2 entsprechen. Der dabei berücksichtigte Ausschnitt des Fahrerblickfeldes kann beispielsweise horizontal >±30° und vertikal: >± 10° des von einer Beleuchtungsvorrichtung BV des Kraftfahrzeugs KFZ (den Scheinwerfern) abgestrahlten Lichtkegels betragen, um z.B. der gesetzlichen Norm ECE-R 123 Rechnung zu tragen. Darüber hinaus kann das erste Messmodul weitere Kameras ME1' umfassen, die zur Aufnahme von einer von dem Kraftfahrzeug KFZ abgestrahlten Lichtverteilung LV (den von der Beleuchtungsvorrichtung BV abgestrahlten Lichtkegel) eingerichtet sind - Aufnahmen "aus Fahrzeugsicht" - und beispielsweise in einem oder in beiden Scheinwerfern angeordnet sein. Dabei kann es sich beispielsweise um Kameras der ADB-Scheinwerfer (Abkürzung für engl. Adaptive Driving Beam) handeln, wenn die Beleuchtungsvorrichtung des Kraftfahrzeugs als ein ADB-Scheinwerfer ausgebildet ist.

Anhand der von des ersten Messmoduls ME1, ME1', ME1" gesammelten Informationen ist es ermöglicht beispielsweise, blendende, wie z.B. die Sonne S, und/oder dunkle Objekte im Kraftfahrzeugvorfeldbereich zu erkennen, wie z.B. ein bei einer Fahrt gegen eine untergehende Sonne dunkel erscheinendes Verkehrsschild AB und/oder ein Gegenfahrzeug G, und diese Objekte S, AB, G voneinander zu unterscheiden (Schritte 3 und 4). Dabei sind nicht alle dunklens Objekte von Bedeutung. So stellen beispielsweise unbeleuchtete Gebäude oder Bäume bei einer Nachtfahrt verhältnismäßig wenig Gefahr für den Fahrer dar, während sich bewegende, beispielsweise sich schnell Richtung Fahrbahn unmittelbar vor das Kraftfahrzeug oder auf der Fahrbahn bewegende, dunkle Objekte, z.B. ein Gegenfahrzeug G, von einem geblendeten Fahrer sehr leicht übersehen werden können. Daher ist es wichtig, nicht nur dunkle, sondern dunkle und fahrsituationsrelevante Objekte zu erkennen. Zu dunklen und fahrsituationsrelevanten Objekten können darüber hinaus beispielsweise sich auf einem Kollisionskurs, insbesondere mit einer hohen Geschwindigkeit, mit dem Fahrzeug befindliche Objekte und/oder sich in einem geringen Abstand zu dem Kraftfahrzeug befindliche Menschen und/oder Tiere zählen, weil diese Objekte (beispielsweise Menschen, Tiere usw...) aufgrund von schlechten Lichtverhältnissen (beispielsweise schlechtem Kontrast) und / oder Blendung des Fahrers übersehen werden können. Zu diesem Zweck können seitens des ersten Messmoduls Mittel zum Messen von Abständen zu und Geschwindigkeiten von sich im Vorfeld des Kraftfahrzeugs befindlichen Objekten vorgesehen sein. Dabei können diese Mittel als Abstands- und Geschwindigkeitssensoren ausgebildet sein. Vorzugsweise können diese Mittel als ein LiDAR-System (Abkürzung für engl. Light Detection And Ranging) oder ein ähnliches System zum Messen von Geschwindigkeiten von und Abständen zu den (beispielsweise als dunkel erkannten) Objekten (Abstands- und Geschwindigkeitssensoren) ausgebildet sein. Die Mittel zum Messen von Abständen und Geschwindigkeiten können beispielsweise in oder nah an einer oder mehreren Kameras ME1, ME1', ME1" angeordnet sein. Darüber hinaus ist es bei einem als dunkel und sich bewegend und/oder fahrsituationsrelevant erkannten Objekt, z. B. bei dem Gegenfahrzeug G, vorteilhaft, die Bewegungsrichtung des Objekts zu erkennen und auf diese Weise seinen aktuellen bzw. den sich zukünftig aus einem Trend ergebenden Geschwindigkeitsvektor zu ermitteln, und das erste Messmodul mit demensprechenden Sensoren vorzusehen. Darüber hinaus kann es besonders bei Nachtfahrten vorteilhaft sein, wenn das erste Messmodul eine Wärmebildkamera (nicht gezeigt) umfasst. Dabei können die unter Verwendung von Wärmebildkamera aufgenommenen Wärmebilder des Vorfelds des Kraftfahrzeugs beim Erkennen der Fahrsituationsrelevanz von als dunklen erkannten Objekten zweckdienlich sein.

Das Messen der Leuchtdichteverteilung kann kontinuierlich und/oder diskontinuierlich, d.h. in vorgegebenen Zeitabständen, erfolgen. Ein Videos aufnehmendes Kamerasystem oder eine Videos aufnehmende Kamera entspricht dabei einem kontinuierlich messenden ersten Messmodul. Ein Bilder in vorgegebenen Zeitabständen aufnehmendes Kamerasystem oder eine Bilder in vorgegebenen Zeitabständen aufnehmende Kamera entspricht dabei einem diskontinuierlich messenden ersten Messmodul. Darüber hinaus kann das erste Messmodul zwischen den Modi (kontinuierlich Messen / diskontinuierlich Messen) abwechseln, oder in beiden Modi gleichzeitig arbeiten (wenn z.B. eine Kamera ME1 Videos P1, P2 und eine andere Kamera ME1' Bilder in vorgegebenen Zeitabständen aufnimmt).

Des Weiteren kann die mittels des ersten Messmoduls gemessene Leuchtdichteverteilung beispielsweise hinsichtlich Koordinaten von Objekten auf der aus einer Fahrersicht, d.h. aus der Sicht des Fahrers, Leuchtdichteverteilung ausgewertet werden.

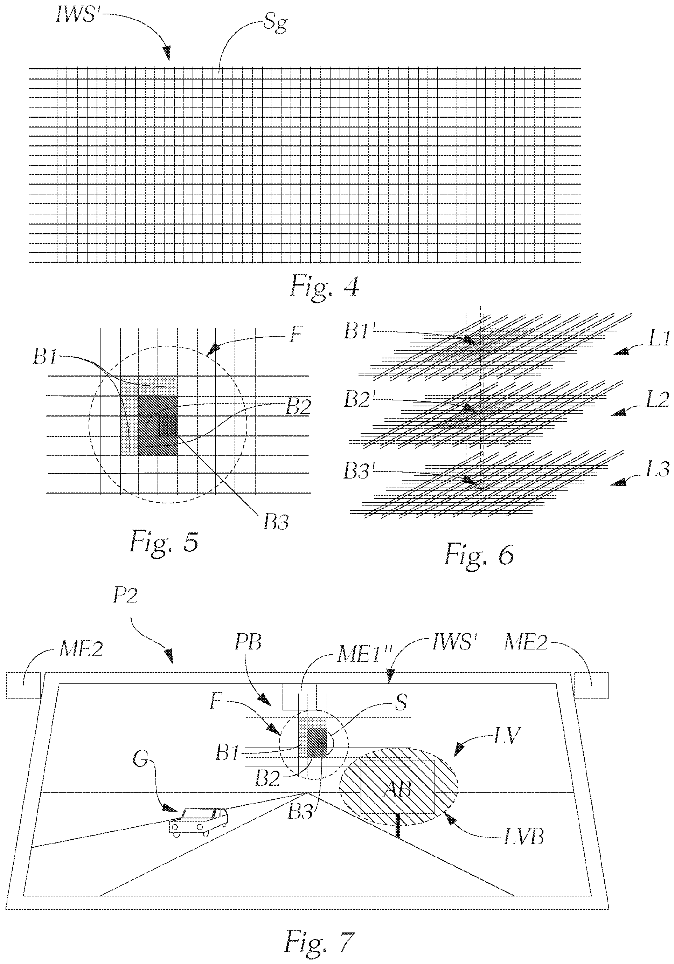

Das Auswerten (Schritt 2) von mittels des ersten Messmoduls gesammelten Messdaten, z.B. der Leuchtdichteverteilung, der mittels der Beleuchtungsvorrichtung BV (Fig. 2) abgestrahlten Lichtverteilung LV (Fig. 7), den Abständen zu und den Geschwindigkeiten von den Objekten vor dem Kraftfahrzeug, erfolgt mittels einer Steuereinrichtung SE (siehe Fig. 2). Anhand dieser Auswertung können Objekte im Bereich vor dem Kraftfahrzeug mittels der Steuereinrichtung SE als blendend (Schritt 3) oder als dunkel und fahrsituationsrelevant (Schritt 4) erkannt werden. Dabei kann die Steuereinrichtung die Messdaten selbstverständlich auch hinsichtlich anderer Größen, wie oben erwähnt, auswerten.

Zum Abblenden des von als blendend erkannten Objekten erzeugten Außenlichts (des blendenden Außenlichts) (Schritt 5) ist eine Abdunkelungseinrichtung vorgesehen. Die primäre Aufgabe der Abdunkelungseinrichtung ist, den Fahrer vor Blendung zu schützen. Die Abdunkelungseinrichtung kann beispielsweise als eine ICF-Windschutzscheibe IWS (siehe Fig. 3 bis Fig. 7) ausgebildet sein. Im Zusammenhang mit der vorliegenden Erfindung ist unter der ICF-Windschutzscheibe, beispielsweise eine LCD-Windschutzscheibe, eine Fahrzeugwindschutzscheibe zu verstehen, bei welcher eine an sich bekannte Intensitätssteuerungsfolie (Abkürzung für engl. Intensity Control Film) vorgesehen und vorzugsweise an der zumindest einen Oberfläche dieser Fahrzeugwindschutzscheibe angeordnet ist. Zwecks eines gezielten Abblendens (Abdunkelns) kann es vorteilhaft sein, die Messdaten beispielsweise hinsichtlich der Geschwindigkeitsvektoren der als blendend erkannten Objekte und ihrer Koordinaten auf der aufgenommenen Leuchtdichteverteilung auszuwerten, um daraus beispielswese mittels der Steuereinrichtung erzeugte Steuerbefehle abzuleiten, welche sodann beispielsweise an die Beleuchtungsvorrichtung und/oder Abdunkelungseinrichtung gesandt werden können. Dabei können anhand dieser Geschwindigkeitsvektoren und Koordinaten Bereiche der Abdunkelungseinrichtung, beispielsweise der ICF-Windschutzscheibe IWS, zu den blendenden Objekten zugeordnet und gezielt, vorzugsweise gezielt und dynamisch (vorzugsweise in Echtzeit, kontinuierlich), mittels der Steuereinrichtung, beispielsweise unter Verwendung von den Steuerbefehlen, angesteuert werden. Unter einer dynamischen Ansteuerung der ICF-Windschutzscheibe IWS oder einer Ansteuerung der ICF-Windschutzscheibe IWS in Echtzeit wird dabei eine Ansteuerung verstanden, die ermöglicht, der Position PB der Blendquelle, z.B. der Sonne, auf der ICF-Windschutzscheibe IWS zu dynamisch/in Echtzeit zu "folgen" und beispielsweise die Transparenz der entsprechenden Bereiche Sg, B1, B2, B3 der ICF-Windschutzscheibe IWS zu reduzieren/zu senken (Fig. 4, 5, 7). Um ein besseres Abblenden zu erreichen, kann es, wie bereits erwähnt, zweckmäßig sein, wenn das erste Messmodul eine im Fahrzeuginnenraum angeordnete Kamera umfasst, mit der Aufnahmen aus Sicht des Fahrers aufgenommen werden können, die als Messdaten verwendet werden. In diesem Fall kann beispielsweise auf die am wahrscheinlichsten vorkommende Kopfposition des Fahrers abgestellt werden und bei dem Abblenden der Abdunkelungseinrichtung die Kopfposition berücksichtigt werden.

Hinsichtlich der Steuerung der ICF-Windschutzscheibe kann es vorteilhaft sein, wenn die ICF-Windschutzscheibe mehrere unabhängig voneinander ansteuerbare ICF-Segmente Sg, B1', B2', B3' aufweist. Dabei können die ICF-Segmente Sg, B1', B2', B3' 5x5 mm (siehe oben) bis 100x100 mm, vorzugsweise 20x20 bis 50x50 mm groß sein und eine rechteckige, bevorzugt quadratische (siehe z.B. Fig. 4) Form aufweisen. Prinzipiell sind auch weitere Formen der ICF-Segmente denkbar (Freiformen). Mit solchen ICF-Segmenten Sg, B1', B2', B3' lassen sich beinah beliebige ICF-Bereiche B1, B2, B3 abdunkeln Dabei kann z.B. speziell auf die Kontur der ICF-Windschutzscheibe IWF abgestellt werden, in dem die ICF-Segmente eine der Kontur der ICF-Windschutzscheibe folgende Form aufweisen. Darüber hinaus kann die Form der ICF-Segmente Sg, B1', B2', B3' größenangepasst an die Position der ICF-Segmente auf der ICF-Windschutzscheibe sein. Beispielsweise kann die ICF-Windschutzscheibe an ihrem oberen (in Bezug auf das fahrende Kraftfahrzeug) Rand längliche, streifenförmige ICF-Segmente aufweisen, welche zum Abblenden von Licht der hoch bis mitteltief stehenden Sonne eingesetzt werden können. Die Zweckmäßigkeit einer Größe der ICF-Segmente hängt im Wesentlichen von der Genauigkeit ab, mit der die sichtrelevanten Parameter des Fahrers (beispielsweise die Augenposition und/oder Augenbereichsposition usw.) bestimmt werden können. Je genauer die sichtrelevanten Parameter des Fahrers bestimmt werden, umso kleiner können die Segmente der ICF-Windschutzscheibe sein, die zum Schutz des Fahrers vor Blendung abgedunkelt werden. Dabei kann eine mit abgedunkelten ICF-Bereichen B1, B2, B3 bedeckte Teilfläche F klein und die transparente (nicht abgedunkelte) Fläche der ICF-Windschutzscheibe groß gehalten werden, wobei jeder abgedunkelte ICF-Bereich B1, B2, B3 ein oder mehrere abgedunkelte ICF-Segmente Sg, B1', B2', B3' umfassen kann.

Des Weiteren kann es zweckdienlich sein, die Abdunkelung an die Lichtverhältnisse anzupassen, welche beispielsweise mithilfe der der Leuchtdichteverteilung entnommenen Leuchtdichtewerte charakterisiert werden können. Als Maß, wie stark beziehungsweise wie viel Licht abgeblendet werden soll, können verschiedene Blendungsgrößen herangezogen werden. Dabei kann auf Unterschiede zwischen einer physiologischen und eine psychologischen Blendung abgestellt werden. Relevante Größen für eine physiologische Blendung sind zum Beispiel die sogenannten "Schleierleuchtdichte" und "Weber-Kontrast". Bei der besonders im Straßenverkehr eine große Rolle spielenden psychologischen Blendung kann eine sogenannte Blendungszahl nach De-Boer-Skala als Maß für eine Quantifizierung der psychologischen Blendung herangezogen werden. Alle hier genannten Größen hängen von den Leuchtdichtewerten der Blendquellen (der als blendend erkannten Objekte) ab. Darüber hinaus sind die Koordinaten / die Positionen der blendenden Objekte auf der Leuchtdichteverteilung für die Berechnung von z.B. Schleierleuchtdichte und Blendungsempfindung nach De-Boer-Skala auch relevant. Um bei der Berechnung von Blendungsgrößen der Kopfposition des Fahrers Rechnung tragen zu können, kann es zweckdienlich sein, wenn die Aufnahme der Lichtdichteverteilung aus Sicht des Fahrers erfolgen kann.

In Schritt 6 wird eine durch eine Beleuchtungsvorrichtung BV des Kraftfahrzeugs abgestrahlte Lichtverteilung LV durch Anheben der erzeugten Beleuchtung der als dunkel und fahrsituationsrelevant erkannten Objekte AB und Absenken der Beleuchtung der als blendend erkannten Objekte geändert. Das Absenken der Beleuchtung der als blendend erkannten Objekte kann beispielsweise bei Nachtfahrten von Vorteil sein, wenn der blendende Gegenverkehr weniger beleuchtet und infolgedessen weniger geblendet wird.

An dieser Stelle muss besonders auf einen Synergieeffekt hingewiesen werden, der sich beim Ausführen von Schritten 5 und 6 ergibt. Das Abblenden und Absenken der Beleuchtung der blendenden Objekte einerseits und gleichzeitiges Anheben der Beleuchtung der dunklen (schlecht sichtbaren/erkennbaren) und fahrsituationsrelevanten Objekte andererseits verbessern sehr stark die von dem Fahrer wahrgenommenen Lichtverhältnisse und/oder Sichtverhältnisse, beispielsweise den Kontrast (z.B. zwischen der mit abgedunkelten, ein oder mehrere abgedunkelte ICF-Segmente Sg, B1', B2', B3' umfassenden, ICF-Bereichen B1, B2, B3 bedeckten Teilfläche F und einem aufgehellten Spot LVB der Lichtverteilung LV, siehe Fig. 7), und erhöhen deshalb die Fahrsicherheit. Dieser Effekt wird insbesondere bei solch prekären Situationen nützlich, wie eine Fahrt (beispielsweise in einer geschlossenen Kurve) gegen eine tiefstehende Sonne, bei der z.B. das Leuchten der Bremsleuchten der vorausfahrenden Fahrzeuge nicht zu erkennen ist, oder eine Nachtfahrt auf eine unbeleuchteten Straße bzw. Landstraße, bei der beispielsweise eine ständige Gefahr des Geratens von Tieren auf die Fahrbahn besteht. Dabei wird eine erhöhte Sicherheit sowohl für den Fahrer als auch für die anderen Verkehrsteilnehmer erreicht.

Fig. 2 zeigt schematisch ein Fahrzeug, das die der Abdunkelungseinrichtung entsprechende ICF-Windschutzscheibe, die Steuereinrichtung SE, das erste Messmodul ME1, ME1' und die Beleuchtungsvorrichtung BV aufweist. Dabei ist ein Teil des ersten Messmoduls ME1 im Fahrzeuginnenraum im Bereich einer Fahrerkopfstütze KS angeordnet und misst das Vorfeld des Kraftfahrzeugs durch die ICF-Windschutzscheibe - aus der Fahrersicht - Fig. 3 und Fig. 7 zeigen Beispiele solcher Aufnahmen. Ein weiterer Teil des ersten Messmoduls ME1' ist in einem der Beleuchtungsvorrichtung entsprechenden Scheinwerfer BV angeordnet beziehungsweise in diesem eingebaut. Die gestrichelten Linien LIN1 bis LIN4 weisen darauf hin, dass die in dem Kraftfahrzeug angeordnete Steuereinrichtung SE des Fahrzeuges KFZ zumindest das erste Messmodul ME1, ME1', die ICF-Windschutzscheibe IWS und die Scheinwerfer BV steuern kann.

Die Beleuchtungsvorrichtung BV kann, wie bereits erwähnt, als ein ADB-Scheinwerfer ausgebildet sein, welcher eine LED-Matrix (mehrere typischerweise auf einer Leiterplatte zueinander ausgerichtet angeordnete LED bzw. ein LED-Array auf Basis eines Chips oder einzelne zueinander ausgerichtet angeordnete LED/Reflektor/Projektor-Einheiten) oder ein höchstauflösendes ADB-System, wie zum Beispiel einen LASER-Scanner bzw. ein LED/LASER-DLP System, umfasst. Dabei erzeugt die Beleuchtungsvorrichtung eine programmierbare Lichtverteilung. Bei einer bevorzugten Ausführungsform, bei welcher die Beleuchtungsvorrichtung eine LED-Matrix umfasst ist die programmierbare Lichtverteilung segmentiert und weist 20 bis 100 Segmente auf. Bei einer anderen Ausführungsform, bei welcher die Beleuchtungsvorrichtung einen LASER-Scanner umfasst kann - aber nicht muss - die programmierbare Lichtverteilung segmentiert (nicht gezeigt) sein, wobei die Segmente folgende Größen aufweisen können: horizontal und vertikal - kleiner als 3°, vorzugsweise kleiner gleich 1°, insbesondere kleiner als 0,1°.

An dieser Stelle muss angemerkt sein, dass die auf die Beleuchtungsvorrichtung bezogenen Winkelangaben nicht mit den Winkelangaben betreffend das Gesichtsfeld des Fahrers verwechselt werden sollen. Auf dem Gebiet der Lichttechnik ist es üblich eine Lichtverteilung beschreibende Maße in Winkeln anzugeben. Dies rührt daher, dass eine Lichtverteilung auf einem typischerweise in einer 25 Meter Entfernung senkrecht zur Hauptabstrahlrichtung aufgestellten Messschirm ausgemessen wird, wobei diese Messung in einem Koordinatensystem erfolgt, in dem Abstände in Winkeln angegeben werden.s

In Fig. 3 ist ein weiterer Teil des ersten Messmoduls ME1" erkennbar, der im Bereich des mittleren Rückspiegels angeordnet ist. Dabei soll betont werden, dass das erste Messmodul aus drei Teilen bestehen kann. Das erste Messmodul kann nur einen einzigen Teil oder mehr hier nicht angeführten Teile aufweisen, welche einem anderen Zweck als das Vermessen eines Bereichs vor dem Kraftfahrzeug hinsichtlich Lichtverhältnisse, Abstände zu und Geschwindigkeiten von vor dem Kraftfahrzeug befindlichen Objekten und zum Erzeugen von Messdaten, welche die Lichtverhältnisse und die Abstände zu und die Geschwindigkeiten von vor dem Kraftfahrzeug befindlichen Objekten umfassen, dienen. Darüber hinaus zeigt Fig. 3 eine ICF-Windschutzscheibe IWS aus Sicht des Fahrers. An der ICF-Windschutzscheibe IWS sind ein blendendes Objekt - die Sonne S - und zwei dunkel erscheinende, fahrsituationsrelevante Objekte - das Gegenfahrzeug G und das Verkehrsschild AB - dargestellt. In dieser Situation besteht eine Gefahr einer physiologischen oder psychologischen Blendung des Fahrers und infolgedessen eine Gefahr des Übersehens und/oder des Nichtbeachtens des Gegenfahrzeugs G und/oder des Verkehrsschilds AB.

Wie oben dargelegt, werden alle oben genannte Verfahrensschritte unter Verwendung von Messdaten des ersten Messmoduls ME1, ME1', ME1" mittels der Steuereinrichtung SE ausgeführt und die Lichtverhältnisse, vorzugsweise aus Sicht des Fahrers, verbessert. Die Steuereinrichtung SE kann, wie erwähnt, beispielsweise eine softwareartige Programmierung oder eine Prozessorsteuerung mit zugehörender Softwares umfassen, welche zur Steuerung und/oder Programmierung des ersten Messmoduls, der Abdunkelungseinrichtung IWS und der Beleuchtungsvorrichtung BV eingerichtet ist. Erfindungsgemäß kann die Steuereinrichtung beispielsweise die einzelnen Segmente der Lichtverteilung (wenn solche Segmente vorgesehen sind) dimmen und aufleuchten. Darüber hinaus kann es vorgesehen sein, dass die Transparenz der einzelnen ICF-Segmente Sg, B1', B2', B3' der ICF-Windschutzscheibe, falls die Abdunkelungseinrichtung als eine segmentierte ICF-Windschutzscheibe ausgebildet ist, von der Steuereinrichtung gesteuert wird.

Eine segmentierte ICF-Windschutzscheibe IWS' ist in Fig. 4 schematisch dargestellt. Die segmentierte ICF-Windschutzscheibe IWS' weist eine Mehrzahl bereits erwähnter quadratischer ICF-Segmente Sg, B1', B2', B3' auf. Es kann vorteilhaft sein, wenn die ICF-Segmente Sg, B1', B2', B3' einzeln und unabhängig voneinander mittels der Steuereinrichtung SE steuerbar sind. Die Transparenz der einzelnen ICF-Segmente Sg, B1', B2', B3' kann kontinuierlich oder sprunghaft geändert werden und vorzugsweise für jedes ICF-Segment jeden Wert zwischen 0% und 100% annehmen.

Aus Sicherheitsgründen ist es vorteilhaft, wenn die Steuereinrichtung, z.B. bei einer Fehlfunktion der Software oder in einem Notfall, jedes Abdunkeln (Abblenden) ausschaltet bzw. die Abdunkelungseinrichtung IWS in den maximal transparenten Modus schaltet.

Eine mit abgedunkelten Segmenten S bedeckte Teilfläche F der ICF-Windschutzscheibe aus der Fahrersicht ist in Fig. 5 gezeigt. Die sTeilfläche F weist drei ICF-Bereiche B1, B2, B3 unterschiedlicher Transparenz mit jeweils sechs, fünf und einem ICF-Segment(en) Sg, B1', B2', B3' auf.

Fig. 6 zeigt eine drei ICF-Schichten L1, L2, L3 aufweisende ICF-Windschutzscheibe IWS, wobei jede ICF-Schicht einen Maximum-Transparenzwert aufweist. Mithilfe einer solchen dreilagigen ICF-Windschutzscheibe, wobei jede ICF-Schicht mehrere gleichartig ausgebildete quadratische ICF-Segmente aufweist, kann aus Fahrersicht der gleiche Effekt der Abdunkelung erreicht werden, der in Fig. 5 gezeigt ist. Dafür kann Transparenz der zwölf ICF-Segmente B1' der ersten ICF-Schicht L1, der sechs über den zwölf ICF-Segmenten B1' der ersten ICF-Schicht L1 liegenden ICF-Segmente B2' der zweiten ICF-Schicht L2 und eines über den sechs ICF-Segmenten B2' der zweiten ICF-Schicht L2 liegenden ICF-Segments B3' der dritten ICF-Schicht L3 jeweils auf einen vorgegebenen Wert (z.B. 50%) abgesenkt werden. Durch kumulative Wirkung der übereinander gelegten ICF-Schichten L1, L2, L3 weist das ICF-Segment B3' den niedrigsten (von den ICF-Segmenten B1', B2', B3') Transparenzwert (z.B. 12,5%) auf und erscheint für den Fahrer am dunkelsten. Durch die eben beschriebene Überlagerung mehrerer ICF-Schichten L1, L2, L3 mit beispielsweise "kachelartig"/in einem rechteckigen Gitter angeordneten quadratisch ausgebildeten einzelnen ICF-Segmente S (siehe z.B. Fig. 4 und Fig. 5) kann eine noch effektivere, noch sicherere Abdunkelung mit verlaufender, lokal unterschiedlich ausgeprägter Transparenz erzielt und somit eine angenehme Kontrastwahrnehmung für den Fahrer eingestellt werden. Dabei können die ICF-Schichten L1, L2, L3 dergestalt angeordnet sein, dass sich die einzelnen ICF-Segmente Sg aus zwei, drei oder mehr übereinander liegenden ICF-Schichten in einer Draufsicht entweder zum Teil oder vollständig überlagern (siehe Fig. 6), wobei jede ICF-Schicht entsprechende ICF-Segmente B1', B2', B3' aufweisen kann und die Segmente einzeln steuerbar sein können. Der Vorteil liegt in einer effektiveren Abdunkelung, weil die Transparenz einer beispielsweise als eine LCD-Schicht ausgebildeten ICF-Schicht beispielsweise nur um 50% reduziert werden kann. Mit mehreren übereinander gelegten ICF-Schichten kann dagegen eine Abdunkelung von beispielsweise 80-95% erreicht werden. Der Grund für eine noch sicherere Abdunkelung ist, dass bei einer sich schnell ändernden Fahrsituation, bei der sich beispielsweise die Positionen von den Blendquellen aus Fahrersicht schnell ändern, eine Mindestabdunkelung von beispielsweise 50% mit einer ICF-Schicht, z.B. durch das Abdunkeln einer großen Fläche auf der ICF-Windschutzscheibe, gewährleistet werden kann, wobei die Blendquelle aus der Fahrersicht im Wesentlichen in der Mitte der großen Fläche positioniert ist, unabhängig davon ob eine Abdunkelung der eine kleine Fläche bildenden ICF-Segmente einer weiteren ICF-Schicht dem Ändern der Fahrsituation "folgen" kann (siehe eine nicht vollständig abgeblendete Sonne S in Fig. 7), wodurch die Blendquelle mit beispielsweise vorgesehenen weiteren 30% abdunkelt wird. An dieser Stelle sei angemerkt, dass unter Verwendung von mehreren ICF-Schichten eine stufenweise Abdunkelung möglich ist, wenn beispielsweise die Position der Blendquelle aus Fahrersicht im Wesentlichen in der Mitte der großen und der kleinen Fläche angeordnet ist. Darüber hinaus kann mithilfe einer derart mehrlagig ausgebildeten (mehrere unterschiedliche Maximum-Transparenzwerte aufweisende ICF-Schichten umfassenden) ICF-Windschutzscheibe die Transparenz (der Transparenzverlauf) quer und / oder entlang der ICF-Windschutzscheibe beispielsweise über einen auf der Steuereinrichtung ausführbaren Algorithmus und / oder unter Verwendung von HMI gesteuert/ geändert werden.

Um die Steuerung der Abdunkelungseinrichtung IWS und/oder der Beleuchtungsvorrichtung BV zu optimieren und die Lichtverhältnisse vorzugsweise aus Sicht des Fahrers, d.h. unter Verwendung eines durch beispielsweise eine ICF-Windschutzscheibe aufgenommenen Bildes/Videos, weiterhin zu verbessern, kann bei dem Kraftfahrzeug ein zweites Messmodul ME2 vorgesehen sein, welche beispielsweise der zweiten Messeinrichtung entsprechen kann und zum, vorzugsweise dynamisch (in Echtzeit) Vermessen sichtrelevanter Parameter des Fahrers, wie z.B. Augenhöhe und/oder Augenbereichsposition und/oder Kopfposition, eingerichtet sein kann. Dabei kann das zweite Messmodul ME2 zur Bild- und / oder Videoaufnahme eingerichtete Kameras, Bewegungs- und/oder Abstandssensoren und/oder andere Feedbacksysteme, wie zum Beispiel ein Eye-Tracking-System (kurz Eye-Tracker), umfassen.

Die Steuereinrichtung kann unter Verwendung von Messdaten (sichtrelevante Parameter des Fahrers) des zweiten Messmoduls ME2 zum Beispiel Koordinaten PB der als blendend erkannten Objekte auf der ICF-Windschutzscheibe IWS (falls vorgesehen) ermitteln und die entsprechenden ICF-Bereiche B1, B2, B3, die beispielsweise aus ICF-Segmenten Sg, B1', B2', B3' gebildet sein können, abdunkeln und auf diese Art den Fahrer vor Blendung, vorzugsweise dynamisch, d.h. in Echtzeit, schützen. Als die oben genannten Messdaten des zweiten Messmoduls ME2 kann beispielsweise eine Fahreraugenbereichsposition (Augenbereichsposition des Fahrers) fungieren. Dabei kann die Steuereinrichtung unter Verwendung der Fahreraugenbereichsposition und z.B. der Koordinaten der Objekte auf der mit des ersten Messmoduls durch eine Abdunkelungseinrichtung, beispielsweise durch die ICF-Windschutzscheibe, vorzugsweise aus der Sicht des Fahrers, aufgenommenen Leuchtdichteverteilung die Abdunkelungseinrichtung, vorzugsweise dynamisch, steuern. So können beispielsweise ICF-Bereiche B1, B2, B3 einer Teilfläche F der ICF-Windschutzscheibe IWS je nach Augenbereichsposition des Fahrers, vorzugsweise in Echtzeit, abgedunkelt und gleichzeitig Spot LVB oder mehrere Spots der Lichtverteilung LV, falls es notwendig ist, aufgehellt werden. Ein mögliches Ergebnis ist in Fig. 7 gezeigt. Im Einzelnen zeigt diese ein mit einer in dem Kopfstützenbereich des Fahrers angeordneten Kamera aufgenommenes Bild (ein Bild aus Fahrersicht). Bei der Auswertung dieses Bildes mittels der Steuereinrichtung wird die Sonne S als eine Blendquelle und das Verkehrsschild AB als dunkel und fahrsituationsrelevant erkannt, wogegen ein entgegenkommendes Fahrzeug G als nicht relevant erkannt wird. Darüber hinaus werden die Positionen der relevanten Objekten (der Sonne S und des Verkehrsschildes AB) auf dem aufgenommenen Bild bestimmt und diese in Koordinaten einer abzudunkelnden Teilfläche F der ICF-Windschutzscheibe IWS und eines aufzuhellenden Spots LVB der Lichtverteilung LV umgerechnet. Nachfolgend werden die ICF-Windschutzscheibe IWS und die Beleuchtungsvorrichtung mittels der Steuereinrichtung unter Verwendung der Koordinaten der abzudunkelnden Teilfläche F und des aufzuhellenden Spots LVB gesteuert. Dabei werden ICF-Bereiche B1, B2, B3 der Teilfläche F abgedunkelt, wodurch die Sonne S (zumindest teilweise) abgeblendet wird, und der Spot LVB der Lichtverteilung LV aufgehellt. Dadurch wird die Sichtbarkeit des Verkehrsschilds AB erhöht und gleichzeitig eine psychologische und/oder physiologische Blendung des Fahrers vermieden.

Auf die oben beschriebene Weise kann die Fahreraugenbereichsposition und/oder die Augenhöhe und/oder die Kopfposition des Fahrers bei der Berechnung der oben erwähnten Blendungsgrößen als einen beleuchteten Gegenstand (das "Auge") verwendet werden, um beispielsweise einen Winkel zwischen der "Blickrichtung des Auges" und der Richtung auf ein blendendes Objekt, z.B. die Sonne S, zu berücksichtigen, und somit bei der Verbesserung der Lichtverhältnisse und/oder Sichtverhältnisse auf die Augenposition des Fahrers abzustellen. Dabei kann unter der "Blickrichtung des Auges" auch eine modellierte Größe verstanden werden. Ein solches Modell kann z.B. ein nur geradeaus, d.h. in die Fahrtrichtung, blickender oder innerhalb eines Öffnungswinkels von beispielsweise 80° in Fahrtrichtung blickender Fahrer sein. Außerdem kann als Blickrichtung ein über mehrere mittels einer Blickerfassungseinrichtung, beispielsweise eines Eye-Trackers erfasste Blickrichtungen gemittelte Wert herangezogen werden. Bekannterweise hängt zum Beispiel die sogenannte Schleierleuchtdichte, die einer der wichtigen Faktoren der physiologischen Blendung darstellt, von dem Winkel zwischen der Blickrichtung des Auges und der Richtung auf ein blendendes Objekt ab. Auf diese Weise werden bei dieser bevorzugten Ausführungsform die Messdaten (z.B. Leuchtdichteverteilung) des ersten Messmoduls ME1, ME1', ME1" durch die Messdaten (sichtrelevante Parameter) des zweiten Messmoduls ME2 vervollständigt und die Licht- und / oder Sichtverhältnisse aus Fahrersicht verbessert.

Darüber hinaus kann das zweite Messmodul eine in dem Kraftfahrzeug integrierte Mensch-Maschine-Schnittstelle ("HMI" zu Englisch für Human-Machine-Interface oder "MMI"s für Man-Machine-Interface) umfassen, welche beispielsweise Größendaten des Fahrers und/oder Sitzstellung usw. zwecks Berechnung der Objektkoordinaten auf der ICF-Windschutzscheibe mittels der Steuereinrichtung ermitteln kann. Wie oben bereits erwähnt, kann es vorteilhaft sein, dass das zweite Messmodul eine oder mehrere Kameras aufweist, die beispielsweise zur Blickerfassung (Eye-Tracking) des Fahrers eingerichtet sein können und beispielsweise an den B-Säulen und/oder an dem Dach über dem Fahrer und/oder an dem Armaturenbrett angeordnet sein können. Dabei können die Blickerfassungsdaten mittels der Steuereinrichtung (statistisch) ausgewertet werden, um beispielsweise die wahrscheinlichste (häufigste) Augenposition des Fahrers zu bestimmen. Hinsichtlich der Blickerfassung, aber auch um z.B. ein Feedback vom Fahrer in Echtzeit bekommen zu können, ist es besonders vorteilhaft, zumindest eine Kamera des zweiten Messmoduls, falls Kameras vorgesehen sind, an dem Armaturenbrett anzuordnen.

Des Weiteren kann das zweite Messmodul ein "Kopftracking-System" umfassen, welches verfeinert werden kann, indem beispielsweise biometrische Daten des Fahrers (z.B. durch die HMI oder durch die Steuereinrichtung) eingespielt bzw. eingemessen werden. Beispielsweise kann der Fahrer anhand einer eingegebenen Kennung und/oder seiner biometrischen Daten (z.B. Gesichtszüge, Kopfform (inklusive "Abweichung" durch Frisur oder Kopfbedeckung usw.) "wiedererkannt" werden. Diese können beispielsweise zu einer Augenpositionsverfolgung (permanentes "Kopftracking") und / oder als einmalige Kalibrierung des zweiten Messmoduls vor Fahrtantritt verwendet werden. Das "Kopftracking-System" kann beispielsweise im Fahrzeuginnenraum positionierte/angeordnete Stereokameras, Fotozellen oder Fotozellenarrays, Lichtschranken o. ä. und Abstandssensoren (Ultraschallsensoren, Triangulationssensoren, o. ä.) bzw. eine Kombinationen daraus umfassen. Im Rahmen der Erfindung werden Sensoren bevorzugt, von welchen Sensoren zumindest ein Teil im Bereich der Fahrerkopfstützen angeordnet ist, und z.B. eine Kombination von Messungen von Kopfstützen- und Dachhimmelpositionen ermöglicht, da in dem Fall weniger störende Einflüsse im Bereich zwischen dem Kopf des Fahrers und demensprechenden Sensor zu erwarten sind. Eine Ausnahme stellt ein Fahrer mit einer Kopfbedeckung (z.B. Huts) dar, wobei sich in diesem Fall eine Korrektur durch eine Kalibrierung vor dem Fahrtantritt, wie oben beschrieben, anbietet.

Zusammenfassend kann es zweckdienlich sein, die in drei Dimensionen erfasste Kopfposition des Fahrers und seine Augenhöhe aktuell zu kennen, und diese beispielsweise bei der Berechnung der Position und/oder der Größe und/oder der Form der abzudunkelnden Bereiche der ICF-Windschutzscheibe oder, im Falle einer segmentierten ICF-Windschutzscheibe, der ICF-Segmente zu berücksichtigen.

Des Weiteren ist es möglich, die Steuereinrichtung, besonders bezüglich der Beleuchtungs-(Aufhellungs-) und/oder Abdunkelungsintensität lernen zu lassen, indem der Fahrer sein Feedback (zum Beispiel mithilfe von Gesten, Tasten, Touchscreens usw.) gibt, welches beispielsweise mithilfe der HMI, die das zweite Messmodul umfassen kann, aufgenommen werden kann. Mit einer auf Erwartungshaltungen abstellenden AI-Logik kann beispielsweise verhaltenssteuernde Lichtbildgestaltung realisiert werden, bei der menschliches Verhalten mit Wissen über menschliche Sensorik/Wahrnehmung semantisch mit beispielsweise mithilfe von HDR (high-dynamic-ränge) Weitwinkel-Kameras und / oder LiDAR/Radar aufgenommenen Kamerabildern abgeglichen und somit ein umfassender Einblick in die Fahrsituation geboten wird.

Darüber hinaus kann es beispielsweise hinsichtlich des Testens der als eine ICF-Windschutzscheibe ausgebildete Abdunkelungseinrichtung und/oder der Kalibrierung des zweiten Messmoduls zweckmäßig sein, wenn per Eingabe des Fahrers ein Bereich der ICF-Windschutzscheibe, vorzugsweise ein ICF-Segment, ausgewählt werden kann, die Blickrichtung des Fahrers erfasst werden kann, und/oder die erfasste Blickrichtung des Fahrers per Eingabe des Fahrers bestätigt werden kann.

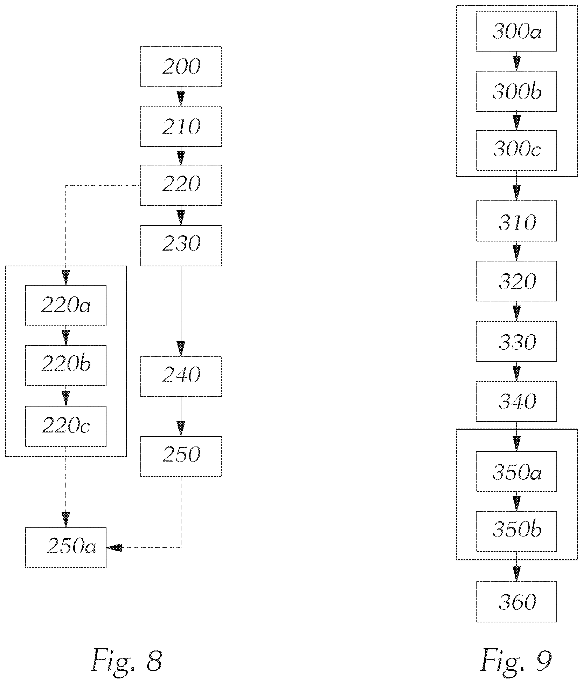

Fig. 8 zeigt ein Flussdiagramm einer bevorzugten Ausführungsform (Algorithmus 1) des erfindungsgemäßen Verfahrens. Dabei umfasst das erste Messmodul zumindest eine Kamera zur Aufnahme von Bildern und/oder Videos, wobei die Beleuchtungsvorrichtung (z.B. ein ADB-Scheinwerfer) zur Erzeugung einer segmentierten, und vorzugsweise programmierbaren, Lichtverteilung eingerichtet ist, wobei vorzugsweise jedes einzelne die Lichtverteilung bildende Lichtsegment der Lichtverteilung mittels der Steuereinrichtung (unabhängig von den anderen Lichtsegmenten) steuerbar / dimmbar ist. Im Einzelnen werden folgende Schritte nacheinander ausgeführt:
Schritt 200: Aufnehmen von Bildern und/oder Videos mithilfe der Kamera(s) des ersten Messmoduls. Dabei ist es vorteilhaft, wenn die Bilder in kleinen Zeitabständen, beispielsweise von 1 bis 1000 ms, vorzugsweise von 10 bis 20 ms aufgenommen werden. Die Größe der Zeitabstände hängt im Wesentlichen von den technischen Möglichkeiten (Spezifikationen) der verwendeten Kameras und/oder der Steuereinrichtung, beispielsweise der Schnelligkeit der Datenerfassung, Auswertung und Weiterleitung (verwendeter Datenbus), ab.
Schritt 210: Auswerten der Bilder und/oder Videos mittels der Steuereinrichtung hinsichtlich der Blendungsrelevanz und Fahrsituationsrelevanz der Objekte vor dem Kraftfahrzeug. Dabei werden zunächst eine abgestrahlte beziehungsweise im Sichtfeld des Fahrers erzeugte Leuchtdichte, Abstände zu und Geschwindigkeiten von, vorzugsweise Geschwindigkeitsvektoren und/oder Bewegungsmuster, jedes einzelnen Objekts ermittelt.
Schritt 220: Erkennen von Objekten vor dem Kraftfahrzeug als blendend und Erkennen von Objekten vor dem Kraftfahrzeug als dunkel und fahrsituationsrelevant. Darüber hinaus können für jedes relevante Objekt, d.h. für jedes als blendend oder als dunkel und fahrsituationsrelevant erkannte Objekt, seine Koordinaten auf den mit der zumindest einen Kamera aufgenommenen Bildern und/oder Videos (und folglich auf der daraus ermittelten Leuchtdichteverteilung) bestimmt werden. Bei zwei oder mehr Kameras kann es zweckmäßig sein, die Koordinaten auf den Bildern und/oder Videos zu bestimmen, die von jener Kamera aufgenommen werden, die am besten Aufnahmen aus der Sicht des Fahrers entspricht.

Die nachfolgenden Schritte 220a bis 220c bilden ein optionales Unterprogramm des Verfahrens. Ausführen dieses Unterprogramms kann besonders bei Nachtfahrten vorteilhaft sein.
Schritt 220a: Erkennen von vorausfahrenden und/oder entgegenkommenden Fahrzeugen. Dabei wird anhand von den seitens der zumindest einen Kamera des ersten Messmoduls aufgenommenen Bildern und/oder Videos mittels der Steuereinrichtung zusätzlich erkannt, ob es bei den Objekten im Sichtfeld des Fahrers um die vorausfahrenden und/oder entgegenkommenden Fahrzeuge handelt. Zur Erkennung der vorausfahrenden und/oder entgegenkommenden Fahrzeuge können insbesondere Geschwindigkeiten der detektierten Objekte und/oder die von ihnen erzeugte Leuchtdichte verwendet werden.
Schritt 220b: Zuordnen von zu dimmenden Lichtverteilungssegmenten einer segmentierten, und vorzugsweise programmierbaren, Lichtverteilung zu den vorausfahrenden und/oder entgegenkommenden Fahrzeugen. Dabei ist es besonders vorteilhaft, wenn mittels des ersten Messmoduls Bilder und/oder Videos aus Fahrzeugsicht aufgenommen werden. Dies kann zum Beispiel mithilfe einer in einem Scheinwerfer oder in beiden Scheinwerfern angeordneten Kamera ME1' erfolgen (siehe Fig. 2), wobei die Steuereinrichtung die zu dimmenden Lichtverteilungssegmente zu den vorausfahrenden und/oder entgegenkommenden Fahrzeugen anhand dieser "Fahrzeugsicht-Bilder" und/oder "Fahrzeugsicht -Videos" zuordnen kann.
Schritt 220c: Dimmen der zu dimmenden Lichtverteilungssegmenten mittels der Beleuchtungsvorrichtung (z.B. eines ADB-Scheinwerfers). Dabei wird durch das Dimmen der Lichtverteilungssegmente eine Absenkung der Lichtstärke in diesen Lichtverteilungselementen erreicht und die vorausfahrenden und/oder entgegenkommenden Fahrzeuge nicht mehr geblendet.

Das Unterprogramm 220a bis 220c zum Ausblenden der am Verkehr teilnehmenden Fahrzeuge muss nicht nach dem Schritt 220 ausgeführt werden. Das Ausführen des Unterprogramms 220a bis 220c kann beispielsweise nach einem der nachfolgenden Schritte 230, 240 oder 250 erfolgen.
Schritt 230: Abblenden der als blendend erkannten Objekte. Dabei werden die blendenden Objekte vorzugsweise anhand ihrer Koordinaten auf den aufgenommenen Bildern und/oder Videos abgeblendet. Die Abdunkelungseinrichtung wird mittels der Steuereinrichtung SE derart gesteuert, dass Bereiche der Abdunkelungseinrichtung entsprechend den Koordinaten der Blendquellen abgedunkelt werden und das das blendende Außenlicht das Sichtfeld des Fahrers nicht stört.
Schritt 240: Zuordnen der als dunkel und fahrsituationsrelevant erkannten Objekte (z.B. eines Verkehrsschildes AB der Fig. 7) zu aufzuhellenden Lichtverteilungssegmenten der programmierbaren segmentierten Lichtverteilung.
Schritt 250: Anheben der Lichtstärke in den aufzuhellenden Lichtverteilungssegmenten.
Schritt 250a: Sofern das Unterprogramm aus Schritten 220a bis 220c ausgeführt wird, Anheben der Lichtstärke in Lichtverteilungssegmenten, die keine zu dimmenden Lichtverteilungssegmente sind. Dieser Schritt stellt ein weiteres optionales Unterprogramm dar, bei welchem die Leuchtdichte im ganzen Umfeld des Kraftfahrzeuges mit einer Ausnahme von den zu dimmenden Lichtverteilungssegmenten erhöht wird. Das Anheben des Lichtstroms (das Aufhellen) der Umgebung von den blendenden Objekten stellt ein augenfreundliches Kontrastniveau ein, und steigert somit die Erkennbarkeit von Objekten und/oder die Sichtgüte (Sicht = die Möglichkeit zu sehen).

Fig. 9 zeigt ein Flussdiagramm einer weiteren bevorzugten Ausführungsform (Algorithmus 2) des erfindungsgemäßen Verfahrens mit weiteren zusätzlichen Schritten. Dabei kann wiederum ein zweites Messmodul vorgesehen sein. Darüber hinaus kann es vorgesehen sein, dass das erste Messmodul zumindest eine Kamera zur Aufnahme von Bildern und/oder Videos, wobei die Beleuchtungsvorrichtung (z.B. ein ADB-Scheinwerfer) zur Erzeugung einer segmentierten, und vorzugsweise programmierbaren, Lichtverteilung eingerichtet ist, wobei vorzugsweise jedes einzelne die Lichtverteilung bildende Lichtsegment der Lichtverteilung mittels der Steuereinrichtung (unabhängig von den anderen Lichtsegmenten) steuerbar / dimmbar ist. Im Einzelnen werden folgende Schritte nacheinander ausgeführt:
Schritt 300a: Aufnehmen von Bildern und/oder Videos mithilfe der zumindest einen Kamera des ersten Messmoduls.
Schritt 300b: Ermitteln einer Augenbereichsposition des Fahrers mittels des zweiten Messmoduls. Dabei kann das zweite Messmodul beispielsweise im Bereich des Rückspiegels und/oder in einem oberen Bereich der B-Säulen angeordnete Kamera/Kameras umfassen, die auf den Fahrer ausgerichtet ist/sind und Bilder und/oder Videos aufnehmen kann/können, welche Bilder und/oder Videos hinsichtlich der sichtrelevanten Parameter des Fahrers ausgewertet werden können.
Schritt 300c: Anpassen der Koordinaten der als blendend erkannten und als dunkel und fahrsituationsrelevant erkannten Objekte auf der mit dem ersten Messmodul aufgenommenen Leuchtdichteverteilung an die Augenbereichsposition des Fahrers. In diesem Schritt werden die mit der/den Kamera/Kameras des ersten Messmoduls aufgenommenen Bilder und/oder Videos mit den mit der/den Kamera/Kameras des zweiten Messmoduls aufgenommenen Bilder und/oder Videos mittels der Steuereinrichtung verglichen und bei dem Ermitteln der Koordinaten aller relevanten Objekte auf die tatsächliche Augenbereichsposition des Fahrers abgestellt. Dabei wird eine Leuchtdichteverteilung aus Fahrersicht und vorzugsweise durch die Abdunkelungseinrichtung, beispielsweise durch die ICF-Windschutzscheibe erzielt.
Schritt 310: Auswerten der Leuchtdichteverteilung aus Fahrersicht hinsichtlich der, bereits serwähnten, Blendungsgrößen. Dabei können Bereiche Leuchtdichteverteilung mit charakteristischen Lichtintensitäten bzw. Kontrastwerten, unabhängig von deren Form bzw. der Zuordenbarkeit zu blendenden oder anderen Objekten ermittelt werden. Darüber hinaus kann Leuchtdichteverteilung hinsichtlich Kontrasts des gesamten Bildes nach verschiedenen Methoden, wie z.B. arithmetische Mittelwerte, Median, lokale Verteilung, bewertet werden.
Schritt 320: Unterteilen der Leuchtdichteverteilung aus Fahrersicht in Bereiche entsprechend dreier Klassen:

| | |
|---|---|
| Klasse I: | Bereiche mit extremer Lichtintensität (Leuchtdichte), |
| Klasse II: | Bereiche mit hohem Kontrast (typischerweise das Umfeld von Bereichen mit hoher Leuchtedichte), und |
| Klasse III: | Bereiche mit diffusem Kontrast. |

Schritt 330: Zuordnen von Objekten vor dem Kraftfahrzeug einer der oben genannten Klassen.
Schritt 340: Ermitteln eines Sichtfeldbereichs des Fahrers auf der Leuchtdichteverteilung anhand der sichtrelevanten Parameter des Fahrers, beispielsweise seiner Kopfpositionsdaten. Im Zusammenhang mit der vorliegenden Erfindung ist folgende Klassifizierung des Sichtfelds des Fahrers bezüglich zumindest eines der sichtrelevanten Parameter des Fahrers (Kopfposition, Augenbereichsposition usw.) und der Fahrtrichtung anzunehmen:
- Bevorzugtes Sichtfeld: ± 15° von der Fahrtrichtung;
- Unmittelbares Sichtfeld: ± 30° von der Fahrtrichtung;
- Maximales mit einer Augenbewegung ohne eine Kopfdrehung erreichbares Sichtfeld: ± 50° von der Fahrtrichtung, und
- Maximales mit einer Augenbewegung mit einer Kopfdrehung erreichbares Sichtfeld: ± 95° von der Fahrtrichtung.

Alle oben genannte Winkel (± 15°, ± 30°, ± 50°, ± 95°), die für die Klassifizierung des Sichtfeldes des Fahrers herangezogen werden, weisen denselben Scheitelpunkt auf. Dabei liegt der Scheitelpunkt vorzugsweise in einem Kopfbereich oder Augenbereich des Fahrers. Bei dem Schritt 340 wird unter Verwendung der sichtrelevanten Parameter des Fahrers, beispielsweise seiner Kopfpositions- und/oder Augenbereichsdaten und unter der oben genannten Klassifizierung des Sichtfeldes des Fahrers ermittelt, wie genau der Sichtfeldbereich des Fahrers auf der Leuchtdichteverteilung angeordnet ist. Dabei können/kann die tatsächliche Kopf- und/oder die tatsächliche Augenposition des Fahrers im Fahrzeuginnenraum eine beträchtliche Rolle spielen, da diese vorzugsweise mit dem Scheitelpunkt zusammenfällt/zusammenfallen.

Nachfolgende Schritte 350a und 350b stellen ein Unterprogramm dar, das einem auf der Steuereinrichtung ausführbaren Bewertungsalgorithmus entspricht.
Schritt 350a: Vergleichen der Positionen der zu einem der drei oben genannten Klassen zugeordneten Objekte vor dem Kraftfahrzeug mit der Position des Sichtfeldbereichs auf der Leuchtdichteverteilung.
Schritt 350b: Ermitteln der abzudunkelnden und aufzuhellenden Bereiche auf der Leuchtdichteverteilung unter Verwendung des Vergleichs des Schritts 350a.

Beispielsweise kann bei dem die Schritte 350a, 350b aufweisenden Bewertungsalgorithmus vorgesehen sein, dass die Bereiche der Klasse I, die den Sichtfeldbereich auf der Leuchtdichteverteilung nicht überlappen, nicht abgedunkelt beziehungsweise nur leicht abgedunkelt werden, sondern vorzugsweise weniger beleuchtet werden. Da es allerdings zu einem Überlapp der Bereiche der Klasse I mit einem beispielsweise dem unmittelbaren Sichtfeld des Fahrers entsprechenden Sichtfeldbereich auf der Leuchtdichteverteilung, z.B. aufgrund der Änderung der Fahrbahnrichtung, kommen kann, ist es vorteilhaft, die Bereiche der Klasse I unabhängig von deren Position bezüglich des Sichtfeldbereichs auf der Leuchtdichteverteilung dergestalt abzublenden und/oder abzudunkeln, dass die Bereiche der Klasse I zumindest keine physiologische Blendung hervorrufen können. Beispielsweise werden aber die Bereiche der Klasse I derart, insbesondere dynamisch, abgeblendet und/oder abgedunkelt, dass die Zeit der physiologischen Adaption des Auges verkürzt wird, falls ein Bereich der Klasse I in zumindest einen Sichtfeldbereich auf der Leuchtdichteverteilung, vorzugsweise in ein dem unmittelbaren oder bevorzugtem Sichtfeld des Fahrers korrespondierenden Sichtfeldbereich auf der Leuchtdichteverteilung, rücken soll.

Darüber hinaus kann der die beispielhaften Schritte 350a, 350b umfassende Bewertungsalgorithmus vorsehen, dass die als dunkel und fahrsituationsrelevant erkannten und einem Bereich der Klasse II oder einem Bereich der Klasse III zugeordneten Objekte, die nicht in dem dem bevorzugten Sichtfeld des Fahrers entsprechenden Sichtfeldbereich sondern in dem dem unmittelbaren Sichtfeld des Fahrers entsprechenden Sichtfeldbereich auf der Leuchtdichteverteilung liegen, sofort stärker beleuchtet werden, wobei vorzugsweise eine Umgebung dieser Objekte gleichzeitig abgeblendet beziehungsweise weniger beleuchtet wird.

Schritt 360: Ändern der Leuchtdichteverteilung aus Fahrersicht mithilfe der Abdunkelungseinrichtung und der Beleuchtungsvorrichtung unter Verwendung des Bewertungsalgorithmus, der beispielsweise Schritte 350a und 350b umfasst.

Es ist durchaus denkbar, dass der Bewertungsalgorithmus noch zusätzliche Schritte umfasst.

Beispielsweise werden in diesem Schritt einerseits anhand von Blendungsgrößen ermittelte Steuerwerte (Abblendestärken) für die segmentierte ICF-Segmente der ICF-Windschutzscheibe (LCD-Windschutzscheibe) berechnet und direkt übergeben, andererseits Aufhellwerte, die beispielsweise anhand von Kontrastwerten ermittelt werden können, an die Beleuchtungsvorrichtung, die vorzugsweise als ein feinst aufgelöst segmentierter (beispielsweise mit Pixelgröße von kleiner als 0,1°) Scheinwerfer ausgebildet ist, übergeben. Dabei kann es vorgesehen sein, dass die oben beschriebenen Algorithmen 1 und 2 in einen gemeinsamen Algorithmus vereint werden, wobei der Algorithmus 1 dem Algorithmus 2 im gemeinsamen Algorithmus hierarchisch übergeordnet sein kann, wobei beispielsweise die Beleuchtungsvorrichtung mittels Steuereinrichtung unter Verwendung von Algorithmus 1 angesteuert wird und die im Algorithmus 2 ermittelten Aufhellwerte als Stellwerte für den Algorithmus 1 verwendet werden.

Darüber hinaus kann es vorteilhaft sein, wenn bei einer Änderung / Optimierung der Kontrastwerte eine Farbnuancierung durchgeführt wird. Dabei können zum Beispiel bei einer Nachfahrt die als dunkel und fahrsituationsrelevant erkannten Objekte mit beispielsweise blauem Licht der beispielsweise als ein RGB-LASER - Scanner bzw. ein DLP-Scheinwerfer mit mehreren Farbdioden ausgebildeten Beleuchtungsvorrichtung beleuchtet werden.

Die in der vorliegenden Erfindung genannten Schritte zur Verbesserung der Licht- und / oder Sichtverhältnisse, durch beispielsweise Ändern der Blendungs- und/oder Kontrastwerte, können schrittweise erfolgen. Darunter ist eine sukzessive Anpassung der Licht- und/oder Sichtverhältnisse zu verstehen, die beispielsweise unter Verwendung einer Informationsrückkopplung in einem auf der Steuereinrichtung ausführbaren Algorithmus erfolgen kann. Als Informationsrückkopplung kann beispielsweise eine nach dem Ändern der Blendungswerte mittels der Abdunkelungseinrichtung und/oder Beleuchtungsvorrichtung mithilfe des ersten Messmoduls aufgenommene geänderte Leuchtdichteverteilung dienen. Dabei können die geänderte Leuchtdichteverteilung mittels der Steuereinrichtung ausgewertet und die Blendungswerte neu berechnet und mit als Ziel definierten theoretischen Blendungswerten verglichen werden.

Es versteht sich, dass die vorstehend genannten Verfahrensschritte und Merkmale nicht nur in der jeweils angegebenen Kombination, sondern auch in anderen Kombinationen oder in Alleinstellung verwendet werden können, wobei dadurch der Rahmen der vorliegenden Erfindung nicht verlassen wird. Darüber hinaus sind die Figuren nicht notwendigerweise maßstabsgerecht. In bestimmten Fällen können Einzelheiten weggelassen werden, die zum Verständnis der vorliegenden Erfindung nicht erforderlich sind.

## Patentansprüche

1. Verfahren zum Verbessern von Lichtverhältnissen aus Sicht eines Fahrers eines Kraftfahrzeugs, wobei das Kraftfahrzeug (KFZ) umfasst:
- eine erste Messeinrichtung (ME1, ME1', ME1"),
- eine zweite Messeinrichtung (ME2),
- zumindest eine Beleuchtungsvorrichtung (BV),
- eine Abdunkelungseinrichtung (IWS), und
- eine Steuereinrichtung (SE),
wobei
* die erste Messeinrichtung (ME1, ME1', ME1") zum Vermessen eines Bereichs vor dem Kraftfahrzeug hinsichtlich Lichtverhältnisse, Abstände zu und Geschwindigkeiten von vor dem Kraftfahrzeug befindlichen Objekten und zum Erzeugen von Messdaten eingerichtet ist,
* die zweite Messeinrichtung (ME2) zum Vermessen des Fahrzeuginnenraums zumindest hinsichtlich sichtrelevanter Parameter des Fahrers eingerichtet ist,
* die zumindest eine Beleuchtungsvorrichtung (BV) dazu eingerichtet ist, eine programmierbare Lichtverteilung (LV) vor dem Kraftfahrzeug (KFZ) zu erzeugen,
* die Abdunkelungseinrichtung (IWS, IWS') dazu eingerichtet ist, in einen Fahrzeuginnenraum von außen eindringendes Außenlicht zumindest teilweise abzublenden, und
* die Steuereinrichtung (SE) zum Ausführen der folgenden Verfahrensschritte eingerichtet ist:
- Messen einer Leuchtdichteverteilung vor dem Kraftfahrzeug und von Abständen zu und Geschwindigkeiten von Objekten vor dem Fahrzeug, um die Messdaten zu erzeugen;
- Auswerten von den Messdaten, um ausgewertete Messdaten zu erzeugen;
- Erkennen von Objekten vor dem Kraftfahrzeug als blendend unter Verwendung der ausgewerteten Messdaten;
- Erkennen von Objekten vor dem Kraftfahrzeug als dunkel und fahrsituationsrelevant unter Verwendung der ausgewerteten Messdaten;
- Abblenden des von als blendend erkannten Objekten (S) erzeugten Außenlichts (des blendenden Außenlichts) mittels der Abdunkelungseinrichtung;
- Ändern der Lichtverteilung durch Anheben der von der Beleuchtungsvorrichtung erzeugten Beleuchtung der als dunkel und fahrsituationsrelevant erkannten Objekte (AB) und/oder Absenken der Beleuchtung der als blendend erkannten Objekte (S),
wobei die Steuereinrichtung (SE) unter Verwendung von mit der zweiten Messeinrichtung (ME2) gesammelten Messdaten, welche mit der zweiten Messeinrichtung (ME2) gesammelten Messdaten zumindest die Augenhöhe und/oder die Augenbereichsposition und/oder die Kopfposition des Fahrers umfassen, zum Ausführen der folgenden, das **Verfahren kennzeichnenden** Verfahrensschritte eingerichtet ist:
- Ermitteln von abzublendenden Bereichen (F) im Sichtfeld des Fahrers;
- Ermitteln von aufzuhellenden Bereichen im Sichtfeld des Fahrers, und
- Ändern der Lichtverteilung (LV) durch Anheben der von der Beleuchtungsvorrichtung erzeugten Beleuchtung der aufzuhellenden Bereiche (LVB) und Absenken der Beleuchtung der abzublendenden Bereiche (F).

2. Verfahren nach Anspruch 1, **dadurch gekennzeichnet, dass** zumindest ein Teil (ME1) der ersten Messeinrichtung (ME1, ME1', ME1") dazu eingerichtet ist, aus Fahrersicht zu messen und die Messdaten aus Fahrersicht aufgenommene Messdaten umfassen.

3. Verfahren nach Anspruch 1 oder 2, **dadurch gekennzeichnet, dass** zumindest ein weiterer Teil (ME1') der ersten Messeinrichtung (ME1, ME1', ME1") dazu eingerichtet ist, aus Fahrzeugsicht zu messen und die Messdaten aus Fahrzeugsicht aufgenommene Messdaten umfassen.

4. Verfahren nach einem der Ansprüche 1 bis 2, **dadurch gekennzeichnet, dass** die erste Messeinrichtung zumindest eine Wärmebildkamera umfasst und das Verfahren ferner folgende Schritte aufweist:
- Aufnehmen von Wärmebildern mithilfe der Wärmebildkamera;
- Erkennen von als dunkel erkannten Objekten als fahrsituationsrelevant unter Verwendung der Wärmebilder.

5. Verfahren nach einem der Ansprüche 1 bis 4, **dadurch gekennzeichnet, dass** die erste Messeinrichtung zumindest eine Kamera (ME1, ME1', ME1") zur Aufnahme von Bildern und/oder Videos umfasst und das Messen der Leuchtdichteverteilung zudem folgende Schritte aufweist:
- Aufnehmen von Bildern und/oder Videos (P1, P2) mithilfe der zumindest einen Kamera, und
- Auswerten der Bilder und/oder Videos (P1, P2) hinsichtlich der Leuchtdichteverteilung vor dem Kraftfahrzeug, wobei die zumindest eine Kamera vorzugsweise derart angeordnet ist, dass die mithilfe der zumindest einen Kamera (ME1) aufgenommenen Bilder und/oder Videos (P1, P2) den Bildern und/oder Videos aus Sicht des Fahrers entsprechen.

6. Verfahren nach einem der Ansprüche 1 bis 5, **dadurch gekennzeichnet, dass** die Steuereinrichtung (SE) die Leuchtdichteverteilung zumindest hinsichtlich Positionen (PB) der als blendend erkannten Objekte (S) auswertet, und das Verfahren zusätzlich folgende Schritte umfasst:
- Ermitteln notwendiger Abblendstärken, insbesondere unter Verwendung der Schleierleuchtdichtewerte der als blendend erkannten Objekte (S), und
- Abblenden der als blendend erkannten Objekte (S) unter Verwendung der notwendigen Abblendstärken und/oder der Positionen der als blendend erkannten Objekte (S).

7. Verfahren nach einem der Ansprüche 1 bis 6, **dadurch gekennzeichnet, dass** die Steuereinrichtung (SE) die Leuchtdichteverteilung zumindest hinsichtlich Kontrastwerte, insbesondere Weber-Kontrastwerte, anhand der Leuchtdichtewerte der als blendend erkannten Objekte und der Leuchtdichtewerte der als dunkel und fahrsituationsrelevant erkannten Objekte (AB) auswertet, und das Verfahren ferner folgenden Schritt aufweist:
- Ändern der Kontrastwerte, insbesondere der Weber-Kontrastwerte.

8. Verfahren nach einem der Ansprüche 1 bis 7, **dadurch gekennzeichnet, dass** die Steuereinrichtung (SE) die Leuchtdichteverteilung zumindest hinsichtlich Blendungswerte, insbesondere Blendungszahlen nach De-Boer-Skala, für alle relevante Objekte auswertet, und das Verfahren zusätzlich folgende Schritte aufweist:
- Ändern der Blendungswerte, insbesondere der Blendungszahlen nach De-Boer-Skala, durch das Abblenden des von als blendend erkannten Objekten (S) erzeugten Außenlichts (des blendenden Außenlichts) mittels der Abdunkelungseinrichtung (IWS, IWS') und/oder durch das Ändern der Lichtverteilung (LV) durch Anheben der von der Beleuchtungsvorrichtung (BV) erzeugten Beleuchtung der als dunkel und fahrsituationsrelevant erkannten Objekte (AB) und Absenken der Beleuchtung der als blendend erkannten Objekte (S).

9. Verfahren nach einem der Ansprüche 1 bis 8, **dadurch gekennzeichnet, dass** zumindest ein zum Aufnehmen der Leuchtdichteverteilung eingerichteter Teil (ME1) der ersten Messeinrichtung (ME1, ME1', ME1") in dem Kraftfahrzeuginnenraum angeordnet ist, die Abdunkelungseinrichtung (IWS) als eine programmierbare, vorzugsweise segmentierte, Intensitätssteuerungsfolie (ICF) auf zumindest einer Windschutzscheibenoberfläche des Kraftfahrzeugs ausgebildet ist, wobei das Abblenden des blendenden Außenlichts zudem folgende Schritte umfasst:
- Zuordnen von ICF-Bereichen (B1, B2, B3) zu den als blendend erkannten Objekten (S);
- Absenken der Transparenz der ICF-Bereiche (B1, B2, B3) und/oder Anheben der Transparenz der Intensitätssteuerungsfolie außerhalb dieser ICF-Segmente.

10. Verfahren nach einem der Ansprüche 1 bis 9, **dadurch gekennzeichnet, dass** die zumindest eine Beleuchtungsvorrichtung (BV) dazu eingerichtet ist, eine segmentweise programmierbare Lichtverteilung (LV) vor dem Kraftfahrzeug zu erzeugen, und das Ändern der Lichtverteilung ferner folgende Schritte aufweist:
- Zuordnen von ersten Lichtverteilungssegmenten (F) zu den als blendend erkannten Objekten (S);
- Absenken der Lichtstärke in den ersten Lichtverteilungssegmenten (F);
- Zuordnen von zweiten Lichtverteilungssegmenten (LVB) zu den als dunkel und fahrsituationsrelevant erkannten Objekten (AB);
- Anheben der Lichtstärke in den zweiten Lichtverteilungssegmenten (LVB), wobei vorzugsweise das Verfahren zudem folgende Schritte aufweist:
- Erkennen von vorausfahrenden und/oder entgegenkommenden Fahrzeugen (G), und
- Zuordnen von ersten Lichtverteilungssegmenten zu den vorausfahrenden und/oder entgegenkommenden Fahrzeugen (G).

11. Verfahren nach einem der Ansprüche 1 bis 10, **dadurch gekennzeichnet, dass** die Steuereinrichtung (SE) unter Verwendung von den mit der zweiten Messeinrichtung (ME2) gesammelten Messdaten zum Ausführen der folgenden zusätzlichen Schritte eingerichtet ist:
- Ermitteln von Blendungswerten, insbesondere von Blendungszahlen nach De-Boer-Skala, für alle relevante Objekte unter Verwendung von den mit der zweiten Messeinrichtung gesammelten Messdaten;
- Ändern der Blendungswerte, insbesondere der Blendungszahlen nach De-Boer-Skala, durch das Abblenden des von als blendend erkannten Objekten (S) erzeugten Außenlichts (des blendenden Außenlichts) mittels der Abdunkelungseinrichtung (IWS, IWS') und/oder durch das Ändern der Lichtverteilung durch Anheben der erzeugten Beleuchtung (LVB) der als dunkel und fahrsituationsrelevant erkannten Objekte (AB) und Absenken der Beleuchtung (F) der als blendend erkannten Objekte (S) mittels der Beleuchtungsvorrichtung (BV).

12. Verfahren nach einem der Ansprüche 1 bis 11, **dadurch gekennzeichnet, dass** die Steuereinrichtung (SE) unter Verwendung von den mit der zweiten Messeinrichtung (ME2) gesammelten Messdaten zum Ausführen der folgenden zusätzlichen Schritte eingerichtet ist:
- Ermitteln von abzublendenden Bereichen (B1, B2, B3) im Sichtfeld des Fahrers unter Verwendung von den mit der zweiten Messeinrichtung gesammelten Messdaten;
- Ermitteln notwendiger Abblendstärken, insbesondere unter Verwendung der Schleierleuchtdichtewerte der als blenden erkannten Objekte, und
- Abblenden der abzublendenden Bereiche (B1, B2, B3) im Sichtfeld des Fahrers unter Verwendung von den notwendigen Abblendstärken.

13. Verfahren nach einem der Ansprüche 1 bis 12, **dadurch gekennzeichnet, dass** die Abdunkelungseinrichtung als eine, programmierbare, vorzugsweise segmentierte, Intensitätssteuerungsfolie (ICF) auf einer Windschutzscheibenfläche des Fahrzeugs ausgebildet ist, die erste Messeinrichtung (ME1, ME1', ME1") in dem Kraftfahrzeuginnenraum angeordnet ist und die Steuereinrichtung (SE) unter Verwendung von den mit der zweiten Messeinrichtung (ME2) gesammelten Messdaten zum Ausführen der folgenden zusätzlichen Schritte eingerichtet ist:
- Ermitteln von abzublendenden Bereichen im Sichtfeld des Fahrers;
- Zuordnen der abzublendenden Bereichen im Sichtfeld des Fahrers zu den ICF-Bereichen (B1, B2, B3);
- Absenken der Transparenz der so zugeordneten ICF-Bereiche (B1, B2, B3) und/oder Anheben der Transparenz der ICF außerhalb der so zugeordneten ICF-Bereiche.

14. Steuerungssystem eines Kraftfahrzeugs zum Verbessern von Lichtverhältnissen aus Sicht eines Fahrers eines Kraftfahrzeugs, wobei das Steuerungssystem umfasst:
- eine erste Messeinrichtung (ME1, ME1', ME1"),
- eine zweite Messeinrichtung (ME2),
- zumindest eine Beleuchtungsvorrichtung (BV),
- eine Abdunkelungseinrichtung (IWS), und
- eine Steuereinrichtung (SE),
wobei
* die erste Messeinrichtung (ME1, ME1', ME1") zum Vermessen eines Bereichs vor dem Kraftfahrzeug hinsichtlich Lichtverhältnisse, Abstände zu und Geschwindigkeiten von vor dem Kraftfahrzeug befindlichen Objekten und zum Erzeugen von Messdaten eingerichtet ist,
* die zweite Messeinrichtung (ME2) zum Vermessen des Fahrzeuginnenraums zumindest hinsichtlich sichtrelevanter Parameter des Fahrers eingerichtet ist,
* die zumindest eine Beleuchtungsvorrichtung (BV) dazu eingerichtet ist, eine programmierbare Lichtverteilung (LV) vor dem Kraftfahrzeug (KFZ) zu erzeugen,
* die Abdunkelungseinrichtung (IWS, IWS') dazu eingerichtet ist, in einen Fahrzeuginnenraum von außen eindringendes Außenlicht zumindest teilweise abzublenden, und
* die Steuereinrichtung (SE) zum Ausführen der Verfahrensschritte des Verfahrens nach einem der Ansprüche 1 bis 13 eingerichtet ist.

15. Kraftfahrzeug mit zumindest einem Steuerungssystem nach Anspruch 14.

## Claims

1. Method for improving lighting conditions from the viewpoint of a driver of a motor vehicle, wherein the motor vehicle (motor vehicle) comprises
- a first measuring device (ME1, ME1', ME1"),
- a second measuring device (ME2),
- at least one lighting device (BV),
- a blackout device (IWS), and
- a control device (SE),
where
* the first measuring device (ME1, ME1', ME1") is arranged to measure an area in front of the motor vehicle with respect to light conditions, distances to and speeds of objects located in front of the motor vehicle and to generate measurement data,
* the second measuring device (ME2) is equipped to measure the vehicle interior at least with regard to parameters relevant to the driver's vision,
* the at least one lighting device (BV) is adapted to generate a programmable light distribution (LV) in front of the motor vehicle (KFZ),
* the darkening device (IWS, IWS' ) is designed to at least partially block out external light entering a vehicle interior from the outside, and
* the control device (SE) is arranged to carry out the following procedural steps:
- measuring a luminance distribution in front of the motor vehicle and distances to and speeds of objects in front of the vehicle to generate the measurement data;
- evaluating the measurement data to generate evaluated measurement data;
- recognising objects in front of the motor vehicle as dazzling using the evaluated measurement data;
- recognising objects in front of the motor vehicle as dark and relevant to the driving situation using the evaluated measurement data;
- dimming the outside light (the dazzling outside light) generated by objects (S) detected as dazzling by means of the darkening device;
- changing the light distribution by raising the illumination of the objects (AB) detected as dark and relevant to the driving situation generated by the lighting device and/or lowering the illumination of the objects (S) detected as dazzling,
wherein the control device (SE) is set up to carry out the following method steps characterizing the method using measurement data collected with the second measurement device (ME2), which measurement data collected with the second measurement device (ME2) comprises at least the eye height and/or the eye region position and/or the head position of the driver:
- determination of areas (F) in the driver's field of vision which are to be dimmed;
- determining areas in the driver's field of vision to be brightened, and
- changing the light distribution (LV) by raising the illumination of the areas to be illuminated (LVB) generated by the lighting device and lowering the illumination of the areas to be dimmed (F).

2. Method according to claim 1, **characterized in that** at least a part (ME1) of the first measuring device (ME1, ME1', ME1") is set up to measure from the driver's perspective and the measurement data comprise measurement data recorded from the driver's perspective.

3. Method according to claim 1 or 2, **characterized in that** at least a further part (ME1') of the first measuring device (ME1, ME1', ME1") is set up to measure from the vehicle view and the measurement data comprise measurement data recorded from the vehicle view.

4. Method according to one of claims 1 to 2, **characterized in that** the first measuring device comprises at least one thermal imaging camera and the method further comprises the following steps:
- taking thermal images by means of the thermal imaging camera;
- recognizing objects recognized as dark as being relevant to the driving situation using the thermal images.

5. Method according to one of claims 1 to 4, **characterized in that** the first measuring device comprises at least one camera (ME1, ME1', ME1") for recording images and/or videos and the method further comprises the following steps: recording thermal images with the aid of the thermal image camera; recognizing objects recognized as dark as relevant to the driving situation using the thermal images:
- recording images and/or videos (P1, P2) with the aid of the at least one camera, and
- evaluating the images and/or videos (P1, P2) with respect to the luminance distribution in front of the motor vehicle, the at least one camera preferably being arranged in such a way that the images and/or videos (P1, P2) recorded with the aid of the at least one camera (ME1) correspond to the images and/or videos from the driver's point of view.

6. Method according to one of claims 1 to 5, **characterized in that** the control device (SE) evaluates the luminance distribution at least with regard to positions (PB) of the objects (S) detected as dazzling, and the method additionally comprises the following steps:
- determining necessary dipped beam intensities, in particular using the fog luminance values of the objects (S) detected as dazzling, and
- dimming of the objects (S) detected as dazzling using the necessary dimming levels and/or the positions of the objects (S) detected as dazzling.

7. Method according to one of claims 1 to 6, **characterized in that** the control device (SE) evaluates the luminance distribution at least with regard to contrast values, in particular Weber contrast values, using the luminance values of the objects detected as dazzling and the luminance values of the objects (AB) detected as dark and relevant to the driving situation, and the method also has the following step:
- changing the contrast values, in particular the Weber contrast values.

8. Method according to one of claims 1 to 7, **characterized in that** the control device (SE) evaluates the luminance distribution at least with regard to glare values, in particular glare numbers according to the De-Boer scale, for all relevant objects, and the method additionally has the following steps:
- changing the glare values, in particular the glare figures according to the De-Boer scale, by dimming the external light (the dazzling external light) generated by objects (S) detected as dazzling by means of the darkening device (IWS, IWS') and/or by changing the light distribution (LV) by raising the illumination, generated by the illumination device (BV), of the objects (AB) detected as dark and relevant to the driving situation and lowering the illumination of the objects (S) detected as dazzling.

9. Method according to one of claims 1 to 8, **characterized in that** at least one part (ME1) of the first measuring device (ME1, ME1', ME1"), which is set up to record the luminance distribution, is arranged in the motor vehicle interior, the dimming device (IWS) is designed as a programmable, preferably segmented, intensity control film (ICF) on at least one windscreen surface of the motor vehicle, the dimming of the dazzling external light also comprising the following steps:
- assigning ICF areas (B1, B2, B3) to the objects (S) detected as dazzling;
- lowering the transparency of the ICF areas (B1, B2, B3) and/or increasing the transparency of the intensity control film outside these ICF segments.

10. Method according to one of claims 1 to 9, **characterized in that** the at least one lighting device (BV) is adapted to generate a light distribution (LV) in front of the motor vehicle which is programmable segment by segment, and the changing of the light distribution further comprises the following steps:
- assigning first light distribution segments (F) to the objects (S) detected as dazzling;
- lowering the light intensity in the first light distribution segments (F);
- assigning second light distribution segments (LVB) to the objects (AB) recognised as dark and relevant to the driving situation;
- increasing the light intensity in the second light distribution segments (LVB), preferably the method also comprising the following steps:
- detection of vehicles (G) driving ahead and/or oncoming vehicles (G), and
- assigning first light distribution segments to the vehicles in front and/or oncoming (G).

11. Method according to any one of claims 1 to 10, **characterized in that** the control device (SE) is arranged to perform the following additional steps using the measurement data collected by the second measuring device (ME2):
- determining glare values, in particular glare numbers according to the De-Boer scale, for all relevant objects using the measurement data collected with the second measuring device;
- changing the glare values, in particular the glare figures according to the De-Boer scale, by dimming the external light (the dazzling external light) generated by objects (S) detected as dazzling by means of the dimming device (IWS, IWS') and/or by changing the light distribution by raising the generated illumination (LVB) of the objects (AB) detected as dark and relevant to the driving situation and lowering the illumination (F) of the objects (S) detected as dazzling by means of the illumination device (BV).

12. Method according to one of claims 1 to 11, **characterized in that** the control device (SE) is set up to carry out the following additional steps using the measurement data collected with the second measuring device (ME2):
- determining areas (B1, B2, B3) to be dimmed in the driver's field of vision using the measurement data collected with the second measuring device;
- determining necessary dipped beam intensities, in particular using the veil luminance values of the objects detected as dipped, and
- dimming of the dimming areas (B1, B2, B3) in the driver's field of vision using the necessary dimming intensities.

13. Method according to one of claims 1 to 12, **characterized in that** the dimming device is formed as a programmable, preferably segmented, intensity control film (ICF) on a windscreen surface of the vehicle, the first measuring device (ME1, ME1', ME1") is arranged in the motor vehicle interior and the control device (SE) is arranged to perform the following additional steps using the measurement data collected by the second measuring device (ME2):
- determining areas in the driver's field of vision to be dimmed;
- assigning the areas in the driver's field of view to be blanked to the ICF areas (B1, B2, B3);
- reducing the transparency of the ICF areas (B1, B2, B3) thus assigned and/or increasing the transparency of the ICF outside.

14. Control system of a motor vehicle for improving lighting conditions from the viewpoint of a driver of a motor vehicle, the control system comprising
- a first measuring device (ME1, ME1', ME1"),
- a second measuring device (ME2),
- at least one lighting device (BV),
- a blackout device (IWS), and
- a control device (SE),
where
* the first measuring device (ME1, ME1', ME1") is arranged to measure an area in front of the motor vehicle with respect to light conditions, distances to and speeds of objects located in front of the motor vehicle and to generate measurement data,
* the second measuring device (ME2) is equipped to measure the vehicle interior at least with regard to parameters relevant to the driver's vision,
* the at least one lighting device (BV) is adapted to generate a programmable light distribution (LV) in front of the motor vehicle (KFZ),
* the darkening device (IWS, IWS') is designed to at least partially block out external light entering a vehicle interior from the outside, and
* the control means (SE) is arranged to carry out the process steps of the method according to any one of claims 1 to 13

15. Motor vehicle with at least one control system according to claim 14.

## Revendications

1. Procédé pour améliorer les conditions d'éclairage du point de vue du conducteur d'un véhicule à moteur, le véhicule à moteur (véhicule automobile) comprenant
- un premier appareil de mesure (ME1, ME1', ME1"),
- un deuxième appareil de mesure (ME2),
- au moins un dispositif d'éclairage (BV),
- un dispositif d'extinction d'incendie (IWS), et
- un dispositif de contrôle (SE),
où
* le premier appareil de mesure (ME1, ME1', ME1") est conçu pour mesurer une zone située devant le véhicule automobile en ce qui concerne les conditions de lumière, les distances et les vitesses des objets situés devant le véhicule automobile et pour générer des données de mesure,
* le deuxième appareil de mesure (ME2) est équipé pour mesurer l'intérieur du véhicule au moins en ce qui concerne les paramètres pertinents pour la vision du conducteur,
* au moins un dispositif d'éclairage (BV) est adapté pour générer une distribution lumineuse programmable (LV) à l'avant du véhicule automobile (KFZ),
* le dispositif d'obscurcissement (IWS, IWS') est conçu pour bloquer au moins partiellement la lumière extérieure qui pénètre à l'intérieur d'un véhicule depuis l'extérieur, et
* l'appareil de contrôle (SE) est agencé pour effectuer les étapes de procédure suivantes:
- mesurer une distribution de luminance à l'avant du véhicule automobile ainsi que les distances et les vitesses des objets à l'avant du véhicule pour générer les données de mesure ;
- l'évaluation des données de mesure pour générer des données de mesure évaluées ;
- reconnaître les objets situés devant le véhicule automobile comme étant éblouissants à l'aide des données de mesure évaluées ;
- reconnaître les objets situés devant le véhicule automobile comme étant sombres et pertinents pour la situation de conduite en utilisant les données de mesure évaluées ;
- l'assombrissement de la lumière extérieure (l'éblouissement de la lumière extérieure) générée par les objets (S) détectés comme éblouissants au moyen du dispositif d'assombrissement ;
- Modifier la distribution de la lumière en augmentant l'éclairage généré par le dispositif d'éclairage des objets (AB) détectés comme sombres et pertinents pour la situation de conduite et/ou en diminuant l'éclairage des objets (S) détectés comme éblouissants,
dans lequel l'appareil de commande (SE) est configuré pour exécuter les étapes de procédé suivantes caractérisant le procédé en utilisant des données de mesure recueillies avec le deuxième appareil de mesure (ME2), lesquelles données de mesure recueillies avec le deuxième appareil de mesure (ME2) comprennent au moins la hauteur des yeux et/ou la position de la région des yeux et/ou la position de la tête du conducteur :
- détermination des zones (F) du champ de vision du conducteur qui doivent être atténuées ;
- déterminer les zones du champ de vision du conducteur qui doivent être éclaircies, et
- Modification de la répartition de la lumière (LV) en augmentant l'éclairement des zones à éclairer (LVB) produit par le dispositif d'éclairage et en diminuant l'éclairement des zones à tamiser (F).

2. Procédé selon la revendication 1, **caractérisé en ce qu'**au moins une partie (ME1) du premier dispositif de mesure (ME1, ME1', ME1") est configurée pour mesurer du point de vue du conducteur et les données de mesure comprennent des données de mesure enregistrées du point de vue du conducteur.

3. Procédé selon la revendication 1 ou 2, **caractérisé en ce qu'**au moins une autre partie (ME1') du premier dispositif de mesure (ME1, ME1', ME1") est installée pour mesurer du point de vue du véhicule et les données de mesure comprennent des données de mesure enregistrées du point de vue du véhicule.

4. Méthode selon l'une des revendications 1 à 2, **caractérisée en ce que** le premier dispositif de mesure comprend au moins une caméra à imagerie thermique et la méthode comprend en outre les étapes suivantes :
- la prise d'images thermiques au moyen de la caméra thermique ;
- reconnaître les objets reconnus comme sombres comme étant pertinents pour la situation de conduite à l'aide des images thermiques.

5. Procédé selon l'une des revendications 1 à 4, **caractérisé en ce que** le premier dispositif de mesure comprend au moins une caméra (ME1, ME1', ME1") pour l'enregistrement d'images et/ou de vidéos et le procédé comprend en outre les étapes suivantes : enregistrement d'images thermiques à l'aide de la caméra à images thermiques ; reconnaissance d'objets reconnus comme sombres comme étant pertinents pour la situation de conduite à l'aide des images thermiques :
- l'enregistrement d'images et/ou de vidéos (P1, P2) à l'aide d'au moins une caméra, et
- Evaluation des images et/ou vidéos (P1, P2) par rapport à la répartition de la luminance à l'avant du véhicule automobile, la ou les caméras étant de préférence disposées de telle sorte que les images et/ou vidéos (P1, P2) enregistrées à l'aide de la ou des caméras (ME1) correspondent aux images et/ou vidéos du point de vue du conducteur.

6. Procédé selon l'une des revendications 1 à 5, **caractérisé en ce que** l'appareil de commande (SE) évalue la répartition de la luminance au moins en ce qui concerne les positions (PB) des objets (S) détectés comme éblouissants, et le procédé comprend en outre les étapes suivantes :
- déterminer les intensités nécessaires des feux de croisement, en particulier en utilisant les valeurs de luminance du brouillard des objets (S) détectés comme éblouissants, et
- Gradation des objets (S) détectés comme éblouissants en utilisant les niveaux de gradation nécessaires et/ou les positions des objets (S) détectés comme éblouissants.

7. Procédé selon l'une des revendications 1 à 6, **caractérisé en ce que** le dispositif de commande (SE) évalue la répartition de la luminance au moins en ce qui concerne les valeurs de contraste, en particulier les valeurs de contraste Weber, sur la base des valeurs de luminance des objets détectés comme éblouissants et des valeurs de luminance des objets (AB) détectés comme sombres et pertinents pour la situation de conduite, et le procédé comprend en outre l'étape suivante :
- la modification des valeurs de contraste, en particulier celles de Weber.

8. Méthode selon l'une des revendications 1 à 7, **caractérisée en ce que** l'appareil de contrôle (SE) évalue la distribution de la luminance au moins en ce qui concerne les valeurs d'éblouissement, en particulier les chiffres d'éblouissement selon l'échelle De-Boer, pour tous les objets pertinents, et la méthode comporte en outre les étapes suivantes :
- modifier les valeurs d'éblouissement, en particulier les chiffres d'éblouissement selon l'échelle De-Boer, en diminuant la lumière extérieure (la lumière extérieure éblouissante) générée par les objets (S) détectés comme éblouissants au moyen du dispositif d'assombrissement (IWS, IWS') et/ou en modifiant la répartition de la lumière (LV) en augmentant l'éclairage, généré par le dispositif d'éclairage (BV), des objets (AB) détectés comme sombres et pertinents pour la situation de conduite et en diminuant l'éclairage des objets (S) détectés comme éblouissants.

9. Procédé selon l'une des revendications 1 à 8, **caractérisé en ce qu'**au moins une partie (ME1) du premier dispositif de mesure (ME1, ME1', ME1"), qui est conçu pour enregistrer la répartition de la luminance, est disposée dans l'habitacle du véhicule automobile, le dispositif de gradation (IWS) est conçu sous la forme d'une feuille de contrôle d'intensité (ICF) programmable, de préférence segmentée, sur au moins une surface du pare-brise du véhicule automobile, la gradation de la lumière extérieure éblouissante comprenant également les étapes suivantes:
- l'attribution de zones ICF (B1, B2, B3) aux objets (S) détectés comme éblouissants;
- abaisser la transparence des zones de coffrage isolant (B1, B2, B3) et/ou augmenter la transparence du film de contrôle de l'intensité en dehors de ces segments de coffrage isolant.

10. Procédé selon l'une des revendications 1 à 9, **caractérisé en ce que** le au moins un dispositif d'éclairage (BV) est adapté pour générer une distribution de lumière (LV) devant le véhicule automobile qui est programmable segment par segment, et le changement de la distribution de lumière comprend en outre les étapes suivantes :
- l'attribution des premiers segments de distribution de la lumière (F) aux objets (S) détectés comme éblouissants ;
- la réduction de l'intensité lumineuse dans les premiers segments de distribution de la lumière (F) ;
- l'attribution de seconds segments de distribution de la lumière (LVB) aux objets (AB) reconnus comme sombres et pertinents pour la situation de conduite ;
- l'augmentation de l'intensité lumineuse dans les seconds segments de distribution de la lumière (LVB), de préférence la méthode comprenant également les étapes suivantes :
- la détection des véhicules (G) circulant en avant et/ou des véhicules venant en sens inverse (G), et
- Affectation des premiers segments de distribution lumineuse aux véhicules qui précèdent et/ou qui viennent en sens inverse (G).

11. Méthode selon l'une quelconque des revendications 1 à 10, **caractérisée en ce que** le dispositif de contrôle (SE) est agencé pour effectuer les étapes supplémentaires suivantes en utilisant les données de mesure collectées par le second dispositif de mesure (ME2) :
- déterminer les valeurs d'éblouissement, en particulier les nombres d'éblouissement selon l'échelle De-Boer, pour tous les objets pertinents en utilisant les données de mesure recueillies avec le deuxième appareil de mesure ;
- modifier les valeurs d'éblouissement, en particulier les valeurs d'éblouissement selon l'échelle De-Boer, en diminuant la lumière extérieure (la lumière extérieure éblouissante) générée par les objets (S) détectés comme éblouissants au moyen du dispositif de variation (IWS, IWS') et/ou en modifiant la répartition de la lumière en augmentant l'éclairage généré (LVB) des objets (AB) détectés comme sombres et pertinents pour la situation de conduite et en diminuant l'éclairage (F) des objets (S) détectés comme éblouissants au moyen du dispositif d'éclairage (BV).

12. Méthode selon l'une des revendications 1 à 11, **caractérisée en ce que** le dispositif de contrôle (SE) est configuré pour effectuer les étapes supplémentaires suivantes en utilisant les données de mesure recueillies avec le deuxième dispositif de mesure (ME2) :
- déterminer les zones (B1, B2, B3) à réduire dans le champ de vision du conducteur à l'aide des données de mesure recueillies avec le deuxième appareil de mesure ;
- déterminer les intensités nécessaires des faisceaux de croisement, notamment en utilisant les valeurs de luminance du voile des objets détectés comme étant en croisement, et
- Gradation des zones de gradation (B1, B2, B3) dans le champ de vision du conducteur en utilisant les intensités de gradation nécessaires.

13. Procédé selon l'une des revendications 1 à 12, **caractérisé en ce que** le dispositif d'ombrage est réalisé sous la forme d'un film de contrôle d'intensité (ICF) programmable, de préférence segmenté, sur une surface de pare-brise du véhicule, le premier dispositif de mesure (ME1, ME1', ME1") est disposé dans l'habitacle du véhicule, et le dispositif de commande (SE) est agencé pour effectuer les étapes supplémentaires suivantes en utilisant les données de mesure collectées par le deuxième dispositif de mesure (ME2) :
- déterminer les zones du champ de vision du conducteur qui doivent être atténuées ;
- l'affectation des zones du champ de vision du conducteur à masquer aux zones ICF (B1, B2, B3) ;
- abaisser la transparence des zones ICF (B1, B2, B3) ainsi attribuées et/ou augmenter la transparence de l'ICF en dehors des zones ICF ainsi attribuées.

14. Système de commande d'un véhicule à moteur pour améliorer les conditions d'éclairage du point de vue du conducteur d'un véhicule à moteur, ledit système de commande comprenant :
- un premier appareil de mesure (ME1, ME1', ME1"),
- un deuxième appareil de mesure (ME2),
- au moins un dispositif d'éclairage (BV),
- un dispositif d'extinction d'incendie (IWS), et
- un dispositif de contrôle (SE),
où
* le premier appareil de mesure (ME1, ME1', ME1") est conçu pour mesurer une zone située devant le véhicule automobile en ce qui concerne les conditions de lumière, les distances et les vitesses des objets situés devant le véhicule automobile et pour générer des données de mesure,
* le deuxième appareil de mesure (ME2) est équipé pour mesurer l'intérieur du véhicule au moins en ce qui concerne les paramètres pertinents pour la vision du conducteur,
* au moins un dispositif d'éclairage (BV) est adapté pour générer une distribution lumineuse programmable (LV) à l'avant du véhicule automobile (KFZ),
* le dispositif d'obscurcissement (IWS, IWS') est conçu pour bloquer au moins partiellement la lumière extérieure qui pénètre à l'intérieur d'un véhicule depuis l'extérieur, et
* le moyen de contrôle (SE) est conçu pour exécuter les étapes du processus de la méthode selon l'une des revendications 1 à 13

15. Véhicule à moteur avec au moins un système de contrôle selon la revendication 14.
